# EUROPÄISCHE PATENTSCHRIFT

(11) **EP 3 056 441 B1**
(45) Veröffentlichungstag und Bekanntmachung des Hinweises auf die Patenterteilung: **10.05.2017**
(21) Anmeldenummer: 16155248.4
(22) Anmeldetag: 11.02.2016
(51) Int. Cl.: B65B 35/24, B65B 35/44, B65B 51/26, B65B 59/00, B65G 19/24, B65B 9/06, B65B 57/00, B65G 19/02

(54) **SCHLAUCHBEUTELMASCHINE UND VERFAHREN ZU IHREM BETRIEB**
TUBULAR BAG MACHINE AND METHOD FOR OPERATING THE SAME
MACHINE A SACS TUBULAIRES ET SON PROCEDE DE FONCTIONNEMENT

(30) Priorität: 11.02.2015 DE 102015101930; 11.02.2015 DE 202015100657 U
(43) Veröffentlichungstag der Anmeldung: 17.08.2016
(73) Patentinhaber: Gerhard Schubert GmbH, 74564 Crailsheim (DE)
(72) Erfinder: HAAF, Walter, 74564 Crailsheim (DE)
(74) Vertreter: Weickmann & Weickmann PartmbB

(56) Entgegenhaltungen:
- EP-A1- 0 571 048
- EP-A1- 2 620 395
- WO-A2-2007/115252
- GB-A- 1 449 904
- GB-A- 2 097 356
- US-A- 4 506 488
- US-A1- 2007 056 833
- US-B1- 6 471 041

## Beschreibung

### I. Anwendungsgebiet

Die Erfindung betrifft Schlauchbeutelmaschinen, bei denen der Schlauchbeutel aus einer laufenden, zunächst ebenen, Folienbahn geformt wird, indem die Längsränder der - meist horizontal oder leicht schräg nach unter laufenden - Folienbahn gegeneinander - meist nach unten - gebogen und in Längsrichtung durchgehend gegeneinander versiegelt werden.

Ins Innere des entstehenden Folienschlauches werden mit der gleichen Laufrichtung und Laufgeschwindigkeit die in den Schlauchbeutelpackungen abzupackenden Produkte von einer Zufuhrkette eingebracht, sodass sich die Produkte danach in den gewünschten Abständen innerhalb des Folienschlauches befinden, sodass nach dem Einbringen der Produkte der Folienschlauch durch Quersiegelnähte zwischen den Produkten in einzelne Schlauchbeutel unterteilt werden kann.

### II. Technischer Hintergrund

Die Zufuhr der Produkte geschieht dabei meist mit der erwähnten Zufuhrkette, auf der die Produkte definiert aufliegen, und die in regelmäßigen Abständen Mitnehmer oder Nester für die Produkte aufweist, und die vor dem Punkt des Gegeneinander-Führens der Längsränder der Folienbahn aus dem inneren Querschnitt des entstehenden Folienschlauches herausgeführt werden muss, meist indem sie nach unten abtaucht.

Statt einer Zufuhrkette können jedoch auch andere Zufuhr-Förderer benutzt werden, weshalb für die Zwecke der vorliegenden Erfindung der eingeführte Begriff Zufuhrkette benutzt wird, dies jedoch jede Art von Zufuhr-Förderer sein kann, der geeignet ist, die Produkte in der notwendigen definierten Art und Weise in den entstehenden Folienschlauch hineinzuliefern, sei es ein Förderband, auf dessen ebener Oberseite die Produkte ohne Formschluss für den Weitertransport lediglich aufliegen, seien es Schiebevorrichtungen, oder gar Roboter.

Ebenso soll im Rahmen der vorliegenden Anmeldung das Produktband 8, das die Produkte, meist ungeordnet zur Zufuhrkette anliefert, jede beliebige geeignete Produkt-Zufuhrvorrichtung sein.

Bei dieser bekannten Art von Schlauchbeutelmaschinen ist es für alle Siegelnähte, auch die Längssiegelnaht, wichtig, dass abhängig von Material und Dicke des Folienmaterials sowie weiteren Parametern, die die beiden Folienlagen mittels Hitze oder auch Ultraschall gegeneinander versiegelnden, also verschmelzenden und verklebenden, Siegelelemente über eine definierte Siegelzeit und mit einer definierten Siegeltemperatur im Eingriff mit dem Folienmaterial sind.

Da die Längssiegelnaht in der Regel mittels zweier benachbarter gegensinnig laufender, Heißsiegelrollen hergestellt wird, die einen bestimmen Durchmesser besitzen, der eine bestimmte Länge der Anlage an den dazwischen geführten beiden Folienrändern ergibt, ist die Laufgeschwindigkeit der Folienbahn und die analoge Drehgeschwindigkeit der Heißsiegelrollen auf die an der Außenfläche der Heißsiegelrollen vorherrschende definierte Siegeltemperatur abgestimmt.

Ein Senken der Durchlaufgeschwindigkeit würde die Einwirkzeit der Siegelrollen auf die Folienbahn, also die Siegelzeit, unzulässigerweise erhöhen, was man zwar - abhängig von den Materialparametern der Folienbahn - ganz oder wenigstens teilweise durch ein Senken der Siegeltemperatur ausgleichen kann, jedoch
- ist eine Temperaturanpassung der Heißsiegelelemente, wie etwa der Heißsiegelrollen, nicht schlagartig, sondern nur langsam möglich und
- darüber hinaus gibt es zulässige Ober- und Untergrenzen, da z. B. bei Unterschreiten einer Mindest-Siegeltemperatur das Folienmaterial nicht mehr ausreichend erweicht wird und bei einem Überschreiten eines Höchstwertes das Folienmaterial vollständig schmilzt oder gar verbrennt.

Aus diesem Grund werden Schlauchbeutelmaschinen in der Regel mit einer konstanten Durchlaufgeschwindigkeit betrieben, wobei natürlich die Laufgeschwindigkeit der Zufuhrkette in der Regel der Laufgeschwindigkeit der Folienbahn entspricht, jedenfalls sofern der Abstand der Mitnehmer auf der Zufuhrkette auch dem späteren gewünschten Abstand der Produkte in dem Folienschlauch entspricht.

Das Problem liegt häufig darin, dass die zu verpackenden Produkte zum einen ungeordnet und zum anderen in wechselnder Anzahl pro Zeiteinheit angeliefert werden, beispielsweise aus einer vorgelieferten Produktionsanlage. Dann kommen die Produkte beispielsweise auf einem breiten Förderband, dem Produktband, als Produkt-Fördervorrichtung, durcheinander liegend und in unterschiedlicher Orientierung liegend an der Schlauchbeutelmaschine an.
- Dann ist eine aufwändige Vorrichtung notwendig, um die Produkte zum einen zu vereinzeln, ggf. richtig zu orientieren und dann zuverlässig in jedes der durch z.B. die Mitnehmer gebildeten Gefache oder Nester der Zufuhrkette genau die gewünschte Produktanzahl - meist nur ein Produkt - und in der richtigen Orientierung einzulegen. Dies führt häufig zu Problemen, wenn beispielsweise die Produkte nur angestaut werden, dadurch unter Umständen übereinander zu liegen kommen, oder durch das Anstauen auch beschädigt werden können, denn dann müssen zusätzliche Ausgleichsmaßnahmen wie Speicherbänder o.ä. ähnliche Puffereinrichtungen vorgesehen werden, um die immer konstant laufende Zufuhrkette korrekt füllen zu können.
- Bei den Schlauchbeutelmaschinen ist weiterhin zu unterscheiden zwischen solchen Maschinen, die permanent ein und dasselbe Produkt abpacken, also niemals oder nur äußerst selten, auf ein anderes Produkt umgestellt werden müssen, und einem variablen Einsatz solcher Schlauchbeutelmaschinen, bei denen relativ oft ein sog. Formatwechsel durchgeführt wird, also die Umstellung von einem bisherigen auf ein neues abzupackendes Produkt, welches sich natürlich hinsichtlich Form, Gewicht, Größe und ggf. weiteren Parametern sowohl des Produktes als auch der Folie in der Regel unterscheidet.

Denn dann müssen die Zufuhrketten umgerüstet werden, indem beispielsweise der Abstand der Mitnehmer in Längsrichtung entlang der Zufuhrkette verändert wird, ggf. die Mitnehmer auch körperlich anders gestaltet sein müssen in Anpassung an die Form des Produktes, und unter Umständen auch die Seitenführungen, die verhindern, dass das Produkt seitlich von der Zufuhrkette herunterläuft, in ihrem Abstand neu eingestellt werden u. ä.

Bei den meisten Schlauchbeutelmaschinen ist hierfür der Ausbau der Zufuhrkette notwendig, was einen erheblichen Aufwand und eine lange Stillstandszeit der Schlauchbeutelmaschine zur Folge hat.

Selbst wenn man die Mitnehmer an der Zufuhrkette in deren eingebautem Zustand entfernen und neue - an der gleichen oder an anderen Positionen - anbringen kann, erfordert dies meistens dennoch zumindest begrenzte Demontagearbeiten an der Schlauchbeutelmaschine, um die Zugänglichkeit an die Zufuhrkette zu erhöhen und/oder das Wechseln der Mitnehmer muss von Hand durchgeführt werden, was nicht unerhebliche Stillstandszeiten der Schlauchbeutelmaschine zur Folge hat.

### III. Darstellung der Erfindung

### a) Technische Aufgabe

Es ist daher die Aufgabe gemäß der Erfindung, eine Schlauchbeutelmaschine zu schaffen, bei der mit geringem baulichen Aufwand immer die zuverlässige, korrekte Füllung der Zufuhrkette gewährleistet ist und ein Formatwechsel in sehr kurzer Zeit durchgeführt werden kann.

### b) Lösung der Aufgabe

Diese Aufgabe wird durch die Merkmale der Ansprüche 1 und 19 gelöst. Vorteilhafte Ausführungsformen ergeben sich aus den Unteransprüchen.

Um auch bei schwankendem Produktnachschub dennoch eine vollständige, korrekte Befüllung der Zufuhrkette zu erreichen und gleichzeitig keinen verbleibenden Überschuss an Produkten zu haben, wird bei einer gattungsgemäßen Schlauchbeutel-Maschine das Umsetzen der Produkte von der Produktzufuhrvorrichtung - im Folgenden für die gesamte Anmeldung immer als Produktband bezeichnet, auch wenn es sich um eine andere Art der Produktzufuhr-Vorrichtung handelt - in die Gefache der Zufuhrkette der Zufuhrketten-Einheit hinein mittels Umsetz-Robotern, sogenannten Pickern, durchgeführt.

Die an die Schlauchbeutel-Maschine pro Zeiteinheit zugeführte Menge an Produkten kann in der Regel nicht beeinflusst werden, da Zuführung meist direkt aus einer Herstellungsmaschine heraus erfolgt.

Die Zufuhrkette kann mit einer begrenzten Veränderungsgeschwindigkeit in ihrer Laufgeschwindigkeit verändert werden, wobei die Veränderung so langsam vollzogen werden muss, dass die entsprechende Anpassung der Temperatur der Längssiegeleinheit möglich ist, die notwendig ist, um die sich verändernde Siegelzeit zu kompensieren.

Ein solcher Ausgleich einer sich ändernden Menge an zugeführten Produkten pro Zeiteinheit ist auch mit anderen Umsetzvorrichtungen als mit Umsetz-robotern in die Zufuhrkette möglich, jedoch zum einen sehr viel aufwendiger und weniger leicht anpassbar.

Bei dem Umsetzen mittels der Picker einer sogenannten Pickerstraße, also in Laufrichtung der Zufuhrkette hintereinander beabstandeten Umsetz-Robotern, ist dies sehr viel einfacher möglich, da beispielsweise die Arbeitsverteilung auf die einzelnen Picker innerhalb der Pickerstraße so geregelt werden kann, dass abhängig von der momentanen Produktzufuhr und unter Berücksichtigung der gleichzeitigen Veränderung der Laufgeschwindigkeit der Zufuhrkette zuverlässig jedes Gefach der Zufuhrkette korrekt gefüllt ist, bevor die Zufuhrkette die Produkte in den entstehenden Folienschlauch hinein abgibt.

Vorzugsweise laufen Produktband und Zufuhrkette dabei parallel zueinander, jedoch in Gegenrichtung zueinander zueinander, also im Gegenlauf.

Dadurch wird erreicht, dass an dem in Durchlaufrichtung der Zufuhrkette letzten arbeitenden Picker noch eine hohe Produktdichte auf dem Produktband vorhanden ist und dieser in seinem Arbeitsbereich befindlichen Gefache zuverlässig befüllen kann, selbst wenn unterschiedliche auf demselben Produktband angelieferte Sorten von Produkten in einem bestimmten Verhältnis auf der Zufuhrkette oder innerhalb eines Gefaches abgelegt werden müssen.

Bevorzugt werden als Picker Roboter verwendet, die aus gelenkig miteinander verbundenem Oberarm, Unterarm und Roboter-Hand bestehen, die gemeinsam den Roboterarm bilden.

Denn dann kann ein solcher Roboterarm, der ja gegenüber der ihn tragenden Basis, meist einem Getriebekasten, um eine erste Hauptschwenkachse verschwenkbar ist, mit seiner Armebene - die zu dieser ersten Hauptschwenkachse lotrecht verläuft - quer zur Verlaufsrichtung der Produktkette und vertikal stehend gewählt werden.

Dadurch ist nur ein geringerer Raumbedarf pro Roboter in Verlaufsrichtung des Produktbandes und/oder der Zufuhrkette notwendig, sodass in Durchlaufrichtung betrachtet der Umsetzbereich, also die Länge der Pickerstraße, sehr kurz ist und die Maschine einen dementsprechend geringen Raumbedarf benötigt.

Der so gut wie immer vorhandene Produktscanner, der Anzahl, insbesondere auch die Lage hinsichtlich Position und gegebenenfalls auch Drehlage der Produkte auf dem Produktband stromaufwärts des Umsetzbereiches erfasst, ist in Laufrichtung des Produktbandes vor dem Umsetzbereich, vorzugsweise so weit wie möglich vor dem Umsetzbereich, angeordnet, um eine möglichst grosse Zeitspanne zwischen dem Erkennen eines zu hohen oder zu niedrigeren Produktaufkommens bis zum Verändern der Laufgeschwindigkeit der Zufuhrkette und/oder der Veränderung der Temperatur der Siegeleinheit, insbesondere der Längssiegeleinheit, zu erhalten.

Um einen Formatwechsel an einer solchen Schlauchbeutel-Maschine in möglichst kurzer Zeit durchzuführen, ist es bereits bekannt, die an der Zufuhrkette befestigten Mitnehmer oder die Nester für Produkte auswechselbar an der Zufuhrkette zu befestigen, um abhängig von Art und Größe des Produktes die Mitnehmer oder Nester in einem größeren oder kleineren Abstand auf der Zufuhrkette anzuordnen oder auch einfach anders geformte, an das neue Produkt angepasste, Mitnehmer oder Nester auf der Zufuhrkette zu befestigen.

In der Regel läuft ja die Zufuhrkette endlos in einer vertikalen Umlaufebene um, wobei die Mitnehmer in dieser Umlaufebene radial nach außen abstehen.

Vom Obertrum einer solchen, über zwei horizontal beabstandete Umlaufrollen umlaufenden, Zufuhrkette ragen die Mitnehmer also nach oben ab. In Laufrichtung links und rechts dieser nach oben ragenden Mitnehmer verläuft in geringem Abstand jeweils ein Auflage-Teil einer Auflagefläche für die Produkte, wobei der ebenfalls in Laufrichtung verlaufende Schlitz zwischen den beiden Auflage-Teilen so gering wie möglich gewählt wird, also gerade groß genug, um die nach oben aufragenden Mitnehmer von der unter der Auflagefläche umlaufenden Zufuhrkette aus in den Bereich nach oberhalb der Auflagefläche aufragen zu lassen, und dort die Produkte vorwärts zu schieben.

Für die Formatumstellung muss also entweder der gesamte Mitnehmer leicht demontierbar und montierbar an der Zufuhrkette sein, oder der Mitnehmer besteht aus einem Basisteil, welches fest verbunden immer an der Zufuhrkette verbleibt und einem demgegenüber leicht montierbaren und demontierbaren Mitnehmer-Teil, welches an dem Basisteil zum Beispiel eingesteckt und verrastet oder auf andere Art und Weise sehr einfach gewechselt werden kann. Das Basisteil steht in diesem Fall in der Regel nicht über die Oberkante der Auflagefläche für die Produkte vor.

Bei bisherigen Lösungen musste zum Wechseln der Mitnehmer die Zufuhrkette entweder komplett aus der Schlauchbeutel-Maschine ausgebaut und dann die Mitnehmer gewechselt werden oder es mussten zumindest andere Teile der Schlauchbeutel-Maschine, wie Abdeckungen, Gehäuseteile u.ä. demontiert werden, um die Mitnehmer an der dann besser zugänglichen Zufuhrkette wechseln zu können.

Erfindungsgemäß sind die Mitnehmer und insbesondere deren Befestigung gegenüber der Zufuhrkette so ausgebildet, dass entweder zum Lösen des gesamten Mitnehmers von der Zufuhrkette oder wenigstens des Mitnehmerteils vom Basis-Teil des Mitnehmers keinerlei Demontagearbeiten an der Schlauchbeutel-Maschine - außer den demontierten Mitnehmern - durchgeführt werden müssen.

Dies soll insbesondere auch dadurch möglich werden, dass die in Richtung der Umlauf-Ebene der Zufuhrkette radial nach außen abragenden Mitnehmer auch durch Bewegung in der Umlaufebene zum montieren und demontieren an die Zufuhrkette angenähert und eingerast oder anderweitig befestigt bzw. von dieser entfernt werden können, und nicht quer dazu von der Seite her an der Zufuhrkette angesteckt werden müssen. Denn gerade die Zugänglichkeit zur Zufuhrkette von der Seite ist erschwert oder überhaupt nicht möglich aufgrund der darüber angeordneten Auflage-Flächen und teilweise auch seitliche Abdeckungen an der Zufuhrkette.

Ferner soll dies vorzugsweise auch bedeuten, dass als Zufuhrkette eine handelsübliche Kette bestehend aus handelsüblichen Ketten-Gliedern verwendet werden kann, also keine Spezialkette benötigt wird, in die bereits Elemente eingebaut sind, die der Befestigung der Mitnehmer dienen. Dadurch wird die Beschaffung und der Preis von Ersatz-Zufuhrketten, die er grundsätzlich Verschleißteile sind, vereinfacht und verbilligt.

Dieser Wechsel der Mitnehmer wurde bisher manuell durchgeführt, was selbst dann, wenn keine zusätzlichen Demontagearbeiten an der Schlauchbeutelmaschine hierfür notwendig waren, einen erheblichen Zeitaufwand bedeutet.

Wenn im Folgenden davon gesprochen wird, dass zwei Teile aneinander entweder leicht lösbar oder nicht lösbar befestigt sind, so ist dies so zu verstehen, dass
- "nicht lösbar" bedeuten soll, dass die beiden Teile entweder nur unter Zerstörung der Verbindung zwischen ihnen voneinander gelöst werden können oder mittels zeitaufwändiger Demontagearbeiten, die insbesondere mehr als 10 Sekunden benötigen, insbesondere unter Benutzung von Werkzeugen und
- "leicht lösbar" bedeuten soll, dass die beiden Teile mit sehr geringem Zeitaufwand, die insbesondere weniger als 10 Sekunden benötigen, insbesondere ohne Benutzung eines Werkzeuges, voneinander ohne Zerstörung des Verbindungsmechanismus gelöst werden können, insbesondere durch ineinanderstecken oder ineinanderschieben und/oder Verrasten, und dadurch bereits die Verbindung hergestellt ist

In einer ersten Bauform der Mitnehmer bestehen diese aus Basisteil und daran befestigtem Mitnehmerteil, wobei das Mitnehmerteil am Basisteil befestigt wird z.B. durch einfaches Einstecken und dabei Verrasten der beiden Teile gegeneinander, und umgekehrt durch einfaches Abziehen des Mitnehmerteils nach oben dieses demontiert werden kann.

Dabei besteht das Problem, dass die Mitnehmer am Ende der Förderstrecke der Zufuhrkette, also wenn der Mitnehmer um die vordere Umlenkrolle herum geführt wird, nicht radial von der Umlenkrolle abstehen soll, sondern der entlang der Förderstrecke immer im gleichen Aufrecht-Winkel zur Horizontalen nach oben aufragende Mitnehmer diesen Aufrecht-Winkel auch zu Beginn des Umlaufs um die stromabwärtige Umlenkrolle so lange beibehalten soll, bis die Oberkante des Mitnehmers unter die Oberkante der Auflagefläche der Zufuhrkette oder eine stromabwärtige nachgeordnete, weitere Auflagefläche, auf die die Produkte von der Zufuhrkette aufgeschoben werden, abgetaucht ist.

Zu diesem Zweck müssen die Mitnehmer vorzugsweise gelenkig um eine in Querrichtung verlaufende Schwenkachse innerhalb des Mitnehmers oder gegenüber der Zufuhrkette gestaltet sein und mit einer entsprechenden Kulissenführung im Bereich des beginnenden Herumführens um die Umlenkrolle geführt sein.

Beispielsweise kann der der Zufuhrkette zugewandte Teil des einstückigen Mitnehmers oder das Basisteil eines zweiteiligen Mitnehmers einen in Laufrichtung der Zufuhrkette sich erstreckenden Führungs-Schenkel aufweisen - beispielsweise neben der eigentlichen Zufuhrkette - der am Ende der Transportstrecke formschlüssig mit einer darunter angeordneten Führungs-Schiene zusammenwirkt, indem die Führungs-Schiene den Führungs-Schenkel beim Erreichen und Umlaufen des Mitnehmers um die stromabwärtige Umlenkrolle solange aufrecht hält, bis der Mitnehmer außer Kontakt mit dem von ihm entlang der Auflagefläche vorwärts geschobenen Produkt gerät.

Bei einer zweiten Bauform, einem einteiligen Mitnehmer, der nur im Ganzen von der Zufuhrkette gelöst oder an dieser wieder befestigt werden kann, ist in der Regel eine solche gelenkige Befestigung zwischen Zufuhrkette und Mitnehmer nicht möglich.

Der Mitnehmer kann dann ersatzweise aus gelenkig miteinander verbundenen Basisteil und darauf befestigtem Mitnehmerteil bestehen, die für den Formatwechsel nicht voneinander getrennt werden, sondern in der Regel nur unter Zerstörung voneinander getrennt werden können. Dabei wird das Basisteil allerdings nicht gelenkig an der Zufuhrkette befestigt, sondern das Mitnehmerteil ist um die Querachse zum Basisteil beweglich, um in der zuvor beschriebenen Weise seinen Aufrecht-Winkel auch im Bereich des ersten Teils des Umlaufes um die stromabwärtige Umlenkrolle beizubehalten.

In diesem Fall müssen die zuvor zwischen dem Mitnehmer und einer entsprechenden feststehenden Führungsschiene beschriebenen Ausgestaltungen zwischen dem Mitnehmer-Teil und einer entsprechenden feststehenden Führungsschiene vorhanden sein.

Auch bei der zuvor beschriebene Lösung eines von einem Basisteil leicht demontierbaren Mitnehmerteils kann entweder die Verbindung zwischen diesen beiden Teilen eine solche quer verlaufende Schwenkachse aufweisen oder innerhalb des demontierbaren Mitnehmerteiles, in dem dieses selbst wieder aus zwei gelenkig miteinander verbundenen Einzelteilen besteht, die zueinander um die besagte Querachse verschwenkbar sind, in der Regel jedoch nicht ohne Zerstörung demontierbar sind.

Wenn bei zweiteiligen Mitnehmern das Basisteil immer an der Zufuhrkette verbleibt, können die Abstände zwischen den Mitnehmern nur dadurch verändert werden, indem das Mitnehmerteil entweder auf jedem oder nur jedem zweiten oder nur jedem dritten Basisteil aufgesetzt wird, sodass die mögliche entstehende Größe der Gefache immer ein ganzzahliges Vielfaches - hinsichtlich der Länge in Durchlaufrichtung - des kürzesten möglichen Gefaches sein kann.

Will man sehr variabel sein, müssten hier also sehr viele Basisteile in sehr geringem Abstand an der Zufuhrkette befestigt werden.

Wenn dagegen zum Wechseln des Formates immer der gesamte Mitnehmer von der Zufuhrkette entfernt wird, müssen lediglich in Längsrichtung eng beabstandete Befestigungsvorrichtungen an der Zufuhrkette hierfür vorhanden sein.

Eine Möglichkeit der Zufuhrkette hierfür - statt zum Beispiel eines Zahnriemens oder glatten Riemens - ist eine aus gelenkig um Querachsen miteinander verbundenen Kettengliedern bestehende übliche Gliederkette als Zufuhrkette. Der übliche konstruktive Aufbau einer solchen mehrgliedrigen Kette mit insbesondere zwei Seitenwangen ermöglicht es, in jedes einzelne Kettenglied und die dabei sich immer im gleichen Abstand befindenden KettenStege jeweils einen Mitnehmer einzustecken, was eine optimal geringe Teilung der Mitnehmer entlang der Gliederkette ergibt.

Eine solche Befestigung führt dann jedoch in der Regel nicht zu einer Schwenkbarkeit des Mitnehmers direkt gegenüber der Zufuhrkette, sondern diese Verschwenkbarkeit muss in einem im Mitnehmer selbst vorhandenen Gelenk realisiert sein.

Um die Formatumstellung, also das Wechseln der Mitnehmer an der Zufuhrkette, nicht manuell durchführen zu müssen, soll dies durch eine entsprechende Ausbildung der Schlauchbeutelmaschine entweder durch die Picker oder einen separate Mitnehmer-Wechsler automatisch durchführbar sein:

Für das Umsetzen der Produkte besitzen die Picker an ihrem vorderen Ende ein Produkt-Werkzeug, beispielsweise einen Greifer oder einen Sauger.

Für das Ergreifen des Mitnehmerteils eines Mitnehmers oder eines gesamten Mitnehmers benötigt der Picker - falls dieser den Mitnehmer-Wechsel durchführen soll - an seinem vorderen Ende ein Mitnehmer-Werkzeug.

An einem Picker können beide Werkzeuge, also Produkt-Werkzeug und Mitnehmer-Werkzeug, gleichzeitig vorhanden sein und das benötigte Werkzeug muss gegebenenfalls für die Benutzung zuvor in eine aktivierte Lage am Picker gebracht werden, beispielsweise verschwenkt werden, ausgefahren werden oder ähnliches.

Da dies jedoch die Masse des Pickers erhöht - was für dessen Beschleunigung und damit seine Arbeitsgeschwindigkeit negativ ist - besteht die bevorzugte Lösung darin, dass an den Pickern ein vorhandenes Produkt-Werkzeug für den Formatwechsel gegen ein Mitnehmer-Werkzeug gewechselt wird und dann die Picker selbsttätig und automatisch die Mitnehmer an der Zufuhrkette wechseln, was bedeutet, dass andere Mitnehmer dort befestigt werden und/oder auch in einem anderen Abstand in Laufrichtung.

Der Wechsel der Werkzeuge, insbesondere der Produkt-Werkzeuge, an den Pickern kann manuell vollzogen werden, was immer noch einen sehr viel geringeren Zeitaufwand bedeutet gegenüber einem vollständig manuellen Wechseln der Mitnehmer.

Vorzugsweise steht jedoch in der Schlauchbeutelmaschine einerseits ein Werkzeug-Magazin mit den benötigten Produkt-Werkzeugen und/oder Mitnehmer-Werkzeugen zur Verfügung. Dieses Werkzeug-Magazin kann sich ständig im Greifbereich der Picker befinden und hierzu in der Regel ortsfest angeordnet sein.

Bevorzugt ist das Werkzeug-Magazin jedoch beweglich und kann in den Arbeitsbereich des jeweiligen Roboters gebracht werden, wofür für jeden Roboter entweder ein eigenes Werkzeug-Magazin oder ein Werkzeug-Magazin für alle Roboter zur Verfügung steht, wie auch bei der festpositionierten Lösung des Werkzeugmagazins.

Bevorzugt ist das oder die Werkzeug-Magazine jedoch derart beweglich ausgebildet, dass es erst bei Bedarf in den Greifbereich des jeweiligen Pickers oder nacheinander aller Picker gebracht werden kann, beispielsweise in dem es auf das Produktband aufgelegt und entlang der Picker gesteuert verfahren werden kann.

Die Picker legen dann jeweils ihr momentan an ihnen befestigtes Werkzeug, zum Beispiel das Produkt-Werkzeug, in dem Magazin an definierter Position ab und entnehmen ein anderes Werkzeug, beispielsweise ein Mitnehmer-Werkzeug oder auch ein anderes Produkt-Werkzeug, wobei Ablegen und Entnehmen einher gehen mit einem Abkoppeln oder Ankoppeln des jeweilige Werkzeuges an dem jeweiligen Picker, sodass das Werkzeug im angekoppelten Zustand sofort funktionsfähig ist.

Zu diesem Zweck sind lösbare Verbindungsvorrichtungen zwischen Werkzeug und Picker vorhanden, die im angekoppelten Zustand sowohl Daten als auch die benötigte Energieform, zum Beispiel Druckluft, vom Picker auf das Werkzeug übertragen.

Mit den nun automatisch an den Pickern befestigten Mitnehmer-Werkzeugen können diese anschließend bei entlang des Umsetzbereiches durchlaufender oder taktweiser durchlaufender Zufuhrkette an dieser die Mitnehmer wechseln und die neuen Mitnehmer an der gewünschten Position der Zufuhrkette befestigen.

Hierfür steht dann im Greifbereich des jeweiligen Roboters ein Mitnehmer-Magazin zur Verfügung, z.B. wiederum auf dem Produktband, in dem nicht benötigte Mitnehmer abgelegt und aus dem andere vom Picker entnommen werden können.

Falls der Mitnehmer-Wechsel jedoch nicht von den Pickern sondern von einem von den Pickern separaten, ebenfalls in der Schlauchbeutelmaschine angeordneten Mitnehmer-Wechsler durchgeführt werden soll, ist dieser vorzugsweise unterhalb der Auflagefläche angeordnet, vorzugsweise in der Aufsicht betrachtet unter der Auflagefläche für die Produkte. Dies hat mehrere Vorteile:
- Zum Einen ist dort das Untertrum der Zufuhrkette besser zugänglich als mir das Obertrum, und vor allem kann das Montieren und Demontieren der Mitnehmer insbesondere durch eine Relativbewegung zur Zufuhrkette quer zu deren Umlaufebene erfolgen.
- Zum Anderen ist dort, also unterhalb der Auflagefläche, genügend Raum vorhanden, um dort auch ein Mitnehmer-Magazin für die Lagerung der momentan nicht benötigten Mitnehmer vorzusehen.

Der Mitnehmer-Wechsler kann ortsfest oder beweglich innerhalb der Schlauchbeutelmaschine, insbesondere in dessen Längsrichtung hin und her beweglich, ausgebildet sein, um auf die gewünschten Positionen sowohl der Zufuhrkette als auch des Mitnehmer-Magazins zugreifen zu können.

Vorzugsweise ist das Mitnehmer-Magazin als Magazin-Kette ausgebildet, die gesteuert umlaufend antreibbar ist, gesteuert von der Steuerung der Schlauchbeutelmaschine.

Eine solche Magazinkette oder auch zwei Magazinketten als Mitnehmer-Magazin können entweder in einer Ebene parallel zur Auflagefläche oder auch in einer Ebene parallel zur Umlaufebene der Zufuhrkette angeordnet sein.

Aufgrund der steuerbaren Umlaufbewegung einer solchen Magazin-Kette kann der Werkzeug-Wechsler dann auch lediglich ortsfest innerhalb der Schlauchbeutelmaschine positioniert sein, natürlich mit einem entsprechenden Greifelement, welches sowohl in der Zufuhrkette befindliche Mitnehmer oder Mitnehmerteile als auch im Mitnehmer-Magazin, insbesondere der Magazin-Kette, vorhandene Mitnehmer oder Mitnehmerteile erreichen und ergreifen kann.

Die Magazin-Kette kann dabei identisch mit der Zufuhrkette gestaltet sein oder zumindest. identisch zur Zufuhrkette gestaltete Ketten-Glider besitzen.

Die Mitnehmer schieben in der Regel jeweils ein Produkt oder auch eine zusammengestellte Gruppe von Produkten entlang einer Auflagefläche vor sich her, indem die Zufuhrkette unter dieser Auflagefläche in einer vertikalen Umlaufebene, die ebenfalls in Laufrichtung der Zufuhrkette verläuft, umläuft und vom Obertrum der endlos umlaufenden Zufuhrkette die Mitnehmer durch einen ebenfalls in Laufrichtung verlaufenden Schlitz in der Auflagefläche nach oben ragen und die darauf liegenden Produkte weiterschieben.

Eine solche Bauform ist sehr einfach an unterschiedliche Produkte anpassbar, indem lediglich die vertikal aufragenden Seitenführungen, die über die Oberseite der Auflagefläche hinausragen, in ihrem gegenseitigen Querabstand und auch im Abstand zu dem Schlitz in der Auflagefläche neu eingestellt werden müssen. Die Breite des Mitnehmers muss in der Regel nicht vollständig dem Querabstand zwischen den Seitenführungen ausfüllen, sodass bei einem nur geringfügig breiteren oder weniger breiten Produkt der Mitnehmer - häufig eine aufrecht stehende, quer verlaufende Platte - nicht immer gewechselt werden muss.

Statt dieser Konstruktion ist es auch möglich, für jedes aufzunehmende Produkt an der Zufuhrkette nicht nur einen Mitnehmer vorzusehen, der das Produkt vor sich herschiebt, sondern den Mitnehmer als Nest auszubilden, in welches das Produkt hineingelegt werden kann und welches somit sowohl selbst eine Auflagefläche als auch Seitenführungen und eine Heckwand besitzt, sodass dann keine darüber hinausgehenden, insbesondere fest montierten, Auflagenflächen für das Produkt mehr notwendig sind.

Diese Lösung hat jedoch den Nachteil, dass dann fast für jedes nur geringfügig anders gestaltete Produkt anders geformte und dimensionierte Nester benötigt werden, weshalb die zuvor beschriebene Lösung in aller Regel favorisiert wird.

Dabei gibt es jedoch häufig das Problem, dass ein mit seiner Unterseite auf einer feststehenden Auflagefläche entlang geschobenes Produkt nicht akzeptabel ist, beispielsweise wenn es sich um Kekse handelt, die auf der Unterseite eine Beschichtung aus Schokolade besitzen, da sich diese auf der Auflagefläche ablagern und diese verschmutzen und zusätzlich die Produkte verunstalten würde.

In diesem Fall besteht eine Lösung darin, die Auflagefläche der Zufuhrketten-Einheit mit der Zufuhrkette in Laufrichtung mitlaufen zu lassen - zum Beispiel in Form eines umlaufenden Riemens -, indem die links und rechts der Mitnehmer vorhandenen Auflageflächen-Teile zum einen in Laufrichtung angetrieben sind und zum anderen in der Regel aus mehreren, in Laufrichtung aufeinander folgenden, Auflage-Abschnitten bestehen.

Dann erfolgt - wenn die Laufgeschwindigkeit der Auflagefläche derjenigen der Transportkette entspricht - keine Relativbewegung in Längsrichtung zwischen Produkt und Auflagefläche - und die beschriebenen Nachteile werden vermieden.

In einer besonderen Ausführungsform kann die Auflagefläche jedoch unabhängig von der Zufuhrkette angetrieben werden und damit auch mit einer anderen Geschwindigkeit als die Zufuhrkette. Dies kann beispielsweise sinnvoll sein, wenn man die Zufuhrkette nur sehr geringfügig schneller laufen lassen will als die Auflagefläche, um ein sicheres Anliegen der Produkte an den Mitnehmern zu gewährleisten.

Sogar ein separater Antrieb der beiden Auflageflächen-Teile und damit mit unterschiedliche Geschwindigkeiten relativ zueinander und/oder auch gegenüber der Zufuhrkette ist möglich, wodurch sogar leichte Drehungen des Produktes um die Hochachse auf der Auflagefläche bewirkt werden können.

Um die Bewegung der mitlaufenden Auflageflächen-Teile mit der Zufuhrkette zu bewirken, können die Auflageflächen-Teile links und rechts von den Mitnehmern direkt an der Zufuhrkette befestigt werden und mittels dieser bewegt werden. Dies würde allerdings zum einen das Wechseln der Mitnehmer an der Zufuhrkette zusätzlich behindern, vor allem aber muss ja am Ende der Transportstrecke die Zufuhrkette nach unten abtauchen, und zuvor noch das Produkt auf eine stromabwärts vorhandene, in der Regel stillstehende, Ablage-Fläche schieben, damit die von oben herangeführte Folienbahn mit ihren Seitenkanten um das auf dieser Ablage-Fläche liegende Produkt herum nach unten geführt und dort gegeneinander gelegt und mit einer Längssiegelnaht gegeneinander versiegelt werden können.

Um hierfür möglichst weit stromaufwärts ausreichend Platz zu schaffen, werden die Auflageflächen-Teile, insbesondere die diese bildenden einzelnen Auflageabschnitte, erfindungsgemäß vorzugsweise mittels je einer ebenfalls endlos umlaufenden Auflage-Kette bewegt, an der die einzelnen Abschnitte befestigt sind und von denen sich je eine Auflage-Kette links und rechts der Zufuhrkette befindet.

Jedoch sind dabei die Umlaufebenen der beiden Auflageketten in Laufrichtung betrachtet im Winkel zur Umlaufebene der Zufuhrkette angeordnet, indem sich das Obertrum der Auflagekette näher an der Umlaufebene der Zufuhrkette befindet als das Untertrum.

Die Auflage-Abschnitte ragen dabei nicht im rechten Winkel von der Umlaufebene der Auflagekette ab, sondern in einem solchen Winkel, dass sie bei Bewegung entlang des Obertrums eine mit den Abschnitten der anderen Auflagekette fluchtende, in der Regel horizontale, Ebene bilden.

Der Vorteil dieser Anordnung besteht darin, dass die Auflageabschnitte beim Erreichen ihrer stromabwärtigen Umlenkrolle ihrer Auflagekette nicht nur nach unten abtauchen, sondern gleichzeitig auch mit ihrem freien Ende von der vertikalen Längsmittelebene der Zufuhrkette und insbesondere der gesamten Schlauchbeutelmaschine nach außen wegschwenken, und damit sehr früh sehr viel Raum für das nach unten und gegeneinander Führen der Längsseitenkanten der Folienbahn freigegeben wird.

Bei einer gattungsgemäßen Maschine werden durch die Anordnung einzelner Steuerungen an den jeweiligen anzusteuernden Maschinenkomponenten, etwa den Robotern oder einer Transportvorrichtung wie dem Produktband oder der Zufuhrkette, statt einer Zentralsteuerung mehrere Vorteile erreicht:

Zum Einen sind diese Wärme erzeugenden Steuerungen relativ weit voneinander entfernt und gleichmäßig über die Bearbeitungsmaschine verteilt, so dass durch die Steuerungen bedingt keine Temperaturspitzen an einem bestimmten Punkt innerhalb der Maschine auftreten.

Des Weiteren können die einzelnen Roboter oder Transportvorrichtungen dadurch zusammen mit der sie erneuernden Steuerung fertig vormontiert und auf Lager gehalten werden, was die Endmontage der Maschine beschleunigt.

Ein weiterer Vorteil besteht darin, dass durch die nicht gehäufte, sondern verteilte Anordnung der Steuerungen diese bereits mittels einer passiven Kühlvorrichtung, wie etwa Kühlrippen oder einem aufgebrachten Kühlkörper, ausreichend gekühlt werden. Eine bevorzugte Bauform eines Kühlkörpers enthält dabei so genannte Heatpipes, mit deren Hilfe die abzuführende Wärme ohne separate Antriebseinheit vom Ort der Wärmequelle zu einem entfernteren, besser geeigneten Ort als Wärmesenke geleitet werden kann.

Damit benötigt die Maschine nur noch einen zentralen, kleinen Restschaltschrank, der keine Steuerungen mehr enthalten muss und soll, sondern lediglich die zentrale Stromzuführung für die gesamte Maschine und die elektrischen Sicherungen für die Maschine.

Bevorzugt werden auch die fast immer benötigten Stromaufbereitungseinheiten nicht in dem Restschaltschrank, sondern für jedes Modul einzeln, beispielsweise in dessen oberem Längsbalken, untergebracht. Da es sich hierbei ebenfalls um eine Wärme erzeugende elektrische Einheit handelt, werden Sie - wie alle elektrischen, Wärme erzeugenden Einheiten - möglichst weit voneinander beabstandet in der Maschine angeordnet.

In einer bevorzugten Ausführungsform ist die Maschine modular aufgebaut, wobei das Maschinengestell jedes Maschinenmoduls einen oben umlaufenden Oberrahmen aufweist, der mittels Ständern aufgeständert ist, die mit dem oberen Rahmen verschraubt oder verschweißt sind.

Die einen Roboter steuernde Steuerung wird vorzugsweise auf der Oberseite dieses Roboters, beispielsweise der Roboterbasis, angeordnet, der an dem Längsbalken und/oder Querbalken befestigt ist. Dadurch kann die Steuerung eine nach oben gerichtete und nach oben offene passive Kühlvorrichtung aufweisen, die von der Umgebungsluft gut gekühlt wird, da sich über dem Längsbalken und/oder Querbalken und über der Arbeitseinheit keine weiteren Wärme erzeugenden Elemente befinden.

Dagegen werden die Steuerungen für die Transportvorrichtungen, die weit unterhalb des Längsbalkens und/oder Querbalkens und meist unterhalb der Roboter verläuft, bevorzugt an der Unterseite dieser Transportvorrichtung angeordnet und weisen eine frei zugängliche Kühl-Vorrichtung auf, die vorzugsweise nach unter weist, wo jedenfalls eine gute Kühlung durch die Umgebungsluft gegeben ist, da sich darunter auch keine Wärme erzeugenden Einheiten mehr befinden.

Bei einem modulartigen Aufbau der Bearbeitungsmaschine ist auch der Restschaltschrank vorzugsweise als eigenes Maschinenmodul ausgebildet, der insbesondere nur aus einem einzigen Querbalken und zwei ihn aufständernden Säulen besteht, und der bevorzugt am Anfang oder Ende der gesamten Maschine angeordnet werden kann. Meist trägt dieser Restschaltschrank auch die Bedieneinheit für die gesamte Maschine.

Um den Energiebedarf der Bearbeitungsmaschine möglichst gering zu halten, werden als Elektromotoren Servomotoren verwendet, die beim Abbremsen der von Ihnen angetriebenen bewegten Komponente Strom erzeugen. Dieser Strom wird entweder mittels der Steuerung einer anderen bewegten Einheit, also einem anderen Elektromotor, zugeführt werden, der momentan Strom benötigt, oder in Batterien oder Pufferkondensatoren gespeichert werden.

Hinsichtlich des Verfahrens wird die Anpassung der Schlauchbeutelerzeugung an eine sich ändernden Produktzufuhr somit dadurch erreicht, dass zum einen die ungeordnet auf dem Produktförderer herangeführten Produkte mittels einer Pickerstraße in die Gefache der Zufuhrkette umgesetzt werden und, wenn notwendig, zu diesem Zweck die Laufgeschwindigkeit der Zufuhrkette - innerhalb vorgegebener Grenzen sowohl für die absolute Geschwindigkeit als auch für die Geschwindigkeitsveränderung - abhängig von der Anzahl der pro Zeiteinheit zugeführten Produkte gesteuert wird.

In Abhängigkeit hiervon wird dann natürlich auch die Laufgeschwindigkeit der Folienbahn angepasst, in der Regel analog verändert, wie die Laufgeschwindigkeit der Zufuhrkette.

Um durch die veränderte Laufgeschwindigkeit der Folienbahn dennoch ein zuverlässiges Siegeln insbesondere der Längssiegelnaht zu bewirken, aber auch der Quersiegelnaht, muss gegenläufig zur Laufgeschwindigkeit der Folienbahn die Temperatur der Längssiegeleinheit angepasst werden.

Bei der Quersiegeleinheit, die meist aus gegeneinander laufenden, quer angeordneten Siegelrollen besteht, muss zusätzlich auch die Drehzahl der Siegelrollen an die sich verändernde Drehzahl der Folienbahn, also des an der Stelle der Querversiegelung bereits vorhandenen Folienschlauches, angepasst werden.

Vorzugsweise muss die Änderungsgeschwindigkeit der Laufgeschwindigkeit der Zufuhrkette begrenzt sein auf eine solche Änderungsgeschwindigkeit, dass die Änderungsgeschwindigkeit der Temperatur der Längssiegeleinheit und/oder der Quersiegeleinheit passend hierzu, insbesondere analog, angepasst werden kann.

Da die Temperaturänderung abhängig von der Absoluttemperatur bei einer solchen Siegeleinheit unterschiedlich ist, hängt dies auch vom absoluten momentanen Temperaturniveau der Siegeleinheit ab, welche wiederum durch die Materialparameter der zu bearbeitenden Folienbahn bestimmt wird.

Wenn hier von der Temperatur der Siegeleinheit die Rede ist, so ist damit generell die Temperatur der Siegelflächen dieser Siegeleinheit gemeint, mit der die Siegeleinheit an der zu siegelnden Folie anliegt.

Zusätzlich zu dieser primären Steuerungsebene kann als zweite Steuerungsebene zusätzlich der in Laufrichtung der Zufuhrkette letzte Roboter die Laufgeschwindigkeit der Zufuhrkette steuern, sodass nur vollständig gefüllte Gefache der Zufuhrkette den Umsetzbereich verlassen. Denn der in dieser Laufrichtung letzte Roboter hat ja die Aufgabe, auch noch die letzten nicht gefüllten Gefache zu füllen, und wenn dies überdurchschnittliche viele in seinem Arbeitsbereich sind, wird er zu diesem Zweck die Laufgeschwindigkeit der Zufuhrkette über eine begrenzte Zeit etwas verringern.

Die an der Zufuhrkette befestigten Mitnehmer werden an demjenigen Trum der umlaufenden Zufuhrkette, in der Regel dem Obertrum, in dem die Mitnehmer in Kontakt mit den Produkten sind, diese vorwärts schieben, in einem über die Förderstrecke der Zufuhrkette definierten Aufrecht-Winkel zur Laufrichtung der Zufuhrkette aufrecht stehend gehalten. Dieser Aufrecht-Winkel wird auch beibehalten, wenn die Mitnehmer am Ende der Zufuhrförderstrecke über die dortige Umlenkrolle nach unten herum geführt werden, jedenfalls zumindest so lange, bis die Oberkante der Mitnehmer unter die Oberseite der Auflagefläche, auf der die vorwärts zu schiebenden Produkte aufliegen, abgetaucht ist und damit außer Eingriff mit dem darauf vorwärts geschobenen Produkten gelangt ist.

Dadurch wird vermieden, dass ein immer radial von der Zufuhrkette abstehender Mitnehmer beim Beginn des Herumführens um die Umlenkrolle in Laufrichtung nach vorn gekippt wird und den hinteren Rand des Produktes einzuklemmen beginnt und beschädigen kann.

Um die Umrüstzeit der Schlauchbeutelmaschine beim Formatwechsel zu verkürzen, wird bei einem notwendigen Austauschen der Mitnehmer und/oder Versetzen der Mitnehmer in Längsrichtung entweder der gesamte Mitnehmer oder nur der entfernbare Mitnehmerteil eines mehrteiligen Mitnehmers von dem ihn tragenden Basisteil entfernt, was auch manuell geschehen kann.

Dies kann automatisch beispielsweise mittels der Picker durchgeführt, an denen hierfür das zum Ergreifen und Wechseln der Mitnehmer notwendige Mitnehmer-Werkzeug montiert wird anstelle des für das Umsetzen der Produkte sonst daran vorhandenen Produkt-Werkzeuges. Es können auch beide Werkzeuge gleichzeitig an jedem Picker vorhanden sein, jedoch erhöht dies die Masse des Pickers, die bei jedem Umsetzvorgang beschleunigt werden muss.

Vorzugsweise ist deshalb der Wechsel des Werkzeuges vorgesehen, der vorzugsweise automatisch durchgeführt wird, indem jeder Picker selbsttätig das momentan an ihm befestigte Werkzeug an definierter Position in einem in seinem Arbeitsbereich befindlichen Werkzeug-Magazin absetzt, abkoppelt, ein anderes Werkzeug, zum Beispiel ein Mitnehmerwerkzeug statt eines Produktwerkzeuges, aus dem Magazin entnimmt, indem er dieses selbsttätig an dem vorderen Ende des Pickers ankoppelt.

Vorzugsweise wird dies jedoch mittels eines separaten Mitnehmer-Wechslers durchgeführt, der ein entsprechendes Mitnehmer-Werkzeug trägt.

Mittels eines solchen Mitnehmerwerkzeuges kann nun der Picker oder der Mitnehmer-Wechsler den entfernbaren Teil eines Mitnehmers oder den ganzen entfernbaren Mitnehmer von der Zufuhrkette entfernen und wahlweise entweder nur an einer anderen Position an der Zufuhrkette befestigen oder in einem Mitnehmer-Magazin an definierter Position ablegen und von dort den benötigten anderen Mitnehmer aufnehmen und an der gewünschten Position an der Zufuhrkette befestigen.

Für das Befestigen und Lösen des Werkzeuges am Picker ist eine Befestigungsvorrichtung notwendig, die jedoch vorzugsweise im vorderen freien Ende des Pickers integriert ist, und meist in einer lösbaren Rastvorrichtung besteht, die mit entsprechenden Gegenelementen am Werkzeug zusammenwirkt.

Bei einem Mitnehmer -Wechsel durch die Picker werden Werkzeug-Magazin und/oder Mitnehmer-Magazin den Pickern vorzugsweise dadurch zur Verfügung gestellt, dass sie auf das Produktband gesetzt und damit den einzelnen Pickern in deren Arbeitsbereich angeliefert wird.

Bei einem Mitnehmer-Wechsler durch einen Mitnehmer-Wechsler wird ein Mitnehmer-Magazin, vorzugsweise eine umlaufende antreibbare Magazine-Kette, dem Mitnehmer-Wechsler in dessen Greifbereich zur Verfügung gestellt, indem vorzugsweise sowohl der Mitnehmer-Wechsler als auch das Mitnehmer-Magazin, insbesondere die Magazin-Kette, unterhalb der Auflagefläche angeordnet werden. Vor allem demontiert und montiert der Mitnehmer-Wechsler die Mitnehmer oder die entfernbaren Teile der Mitnehmer am Untertrum der Zufuhrkette, indem er sie vorzugsweise quer zur Umlaufebene der Zufuhrkette von dieser abzieht oder auf diese aufsteckt.

Für alle Vorgänge müssen natürlich die Positionen und auch Drehlagen der zu ergreifenden und bewegenden Teile bekannt sein, also für den Umsetzbetrieb die Position und ggfs. Drehlage der Produkte auf dem Produktband und für den Umrüstbetrieb die Position und Drehlage sowohl der einzelnen Mitnehmer in dem Mitnehmer-Magazin als auch dessen Position zum Beispiel auf dem Produktband und in gleicher Weise die Position und Drehlage und natürlich auch Art der Mitnehmerwerkzeuge im Werkzeugmagazin und dessen Position auf dem zum Beispiel Produktband und damit später im Arbeitsbereich der einzelnen Picker.

Diese Positionen werden durch einen in Laufrichtung der Produkte, also des Produktbandes, vor dem Umsetzbereich am Produktband, vorzugsweise quer über das Produktband verlaufend, angeordneten Produktscanner ermittelt, der diese Informationen an die Steuerung weitergibt, welche unter Berücksichtigung der Laufgeschwindigkeit, zum Beispiel des Produktbandes, die Picker entsprechend steuert.

Damit alle Mitnehmer an der Zufuhrkette gewechselt, also korrekt neu gesetzt werden, muss sich natürlich auch die Zufuhrkette entlang des Umsetzbereiches bewegen, vorzugsweise abschnittsweise, indem ein bestimmter Abschnitt der Zufuhrkette im Umsetzbereich stillsteht, solange die im Umsetzbereich befindlichen Mitnehmer von den Pickern gewechselt werden, und danach die Zufuhrkette wieder um eine Strecke vorwärts bewegt und erneut angehalten wird.

Um ein Entlanggleiten der Produkte mit ihrer Unterseite auf einer feststehenden Auflagefläche links und rechts der Mitnehmer, durch die sie vorwärts geschoben werden, zur vermeiden, kann die Auflagefläche ebenfalls in Laufrichtung der Zufuhrkette und vorzugsweise mit der gleichen Geschwindigkeit angetrieben werden.

Da am Ende der Förderstrecke der Zufuhrkette jedes einzelne Produkt von dem Mitnehmer auf eine nachfolgende, auf gleicher Höhe oder knapp darunter befindliche feststehende Auflagefläche hinübergeschoben wird, um die herum die Ränder der von oben herangeführten Folienbahn nach unten gebogen werden müssen, wird unmittelbar hinter dem Ende der Förderstrecke der Zufuhrkette ausreichend Freiraum um das auf dieser meist feststehenden Auflagefläche abgelegte Produkt herum benötigt.

Deshalb werden die mitbewegten, beidseitigen Auflageflächen vorzugsweise nicht an der Zufuhrkette selbst befestigt und um deren Umlenkrolle nach unten wegtauchend geführt, sondern die beidseitigen Auflageflächen sind an separaten, endlos umlaufenden Auflage-Ketten geführt, deren Umlaufebenen zu dem in der Mitte dazwischen vertikal stehenden Umlaufebene der Zufuhrkette in einem Winkel angeordnet sind - betrachtet in Laufrichtung der Zufuhrkette - sodass sich das Obertrum der Auflage-Kette näher an der Umlaufebene der Zufuhrkette befindet als das Untertrum.

Um bei dieser Lage der Umlaufebene neben den Mitnehmern in Querrichtung horizontale Auflagefläche für die Produkte zu schaffen, müssen die Auflageflächen von der Ebene der Auflagekette nicht im rechten Winkel, sondern schräg stehend dazu abragen.

Dies hat zum einen den Nachteil, dass die beiderseitigen Auflageflächen-Teile kein biegsames, an der Auflagekette befestigtes Bandmaterial sein kann, sondern jede der beiden beidseitigen Auflageflächen-Teile aus in Laufrichtung hintereinander beabstandeten Auflage-Abschnitten besteht, die einzeln an der Auflagekette befestigt sind.

Dadurch wird der hinsichtlich der Vorgehensweise bezweckte Vorteil erreicht, dass beim Abtauchen am Ende der Förderstrecke der Zufuhrkette, die mit der Förderstrecke der Auflagenkette übereinstimmt, die Auflageabschnitte beim Herumführen um die stromabwärtige Umlenkrolle der Auflagekette nicht nur nach unten abtaucht, sondern gleichzeitig in der Aufsicht betrachtet von der Längsmittelebene, also der Umlaufebene der Zufuhrkette aus, radial nach außen weggeführt werden, sodass dazwischen unmittelbar hinter dem Ende der Förderstrecke ein sich konisch öffnender Freiraum entsteht für das Anordnen des Schlauchbeutel-Formschuhes.

### c) Ausführungsbeispiele

Ausführungsformen gemäß der Erfindung sind im Folgenden beispielhaft näher beschrieben. Es zeigen:
- Fig. **1:**: die Schlauchbeutelmaschine in perspektivischer Ansicht,
- Fig. **2**a,b,c:: die Schlauchbeutelmaschine in Seitenansicht, Aufsicht und Frontansicht,
- Fig. **3**a,b,c:: die Schlauchbeutel-Baugruppe in Seitenansicht, Aufsicht und Frontansicht,
- Fig. **4**a, b:: die Zufuhrkette der Zufuhrketten-Einheit in unterschiedlichen Vergrößerungen ausschnittweise in der Seitenansicht,

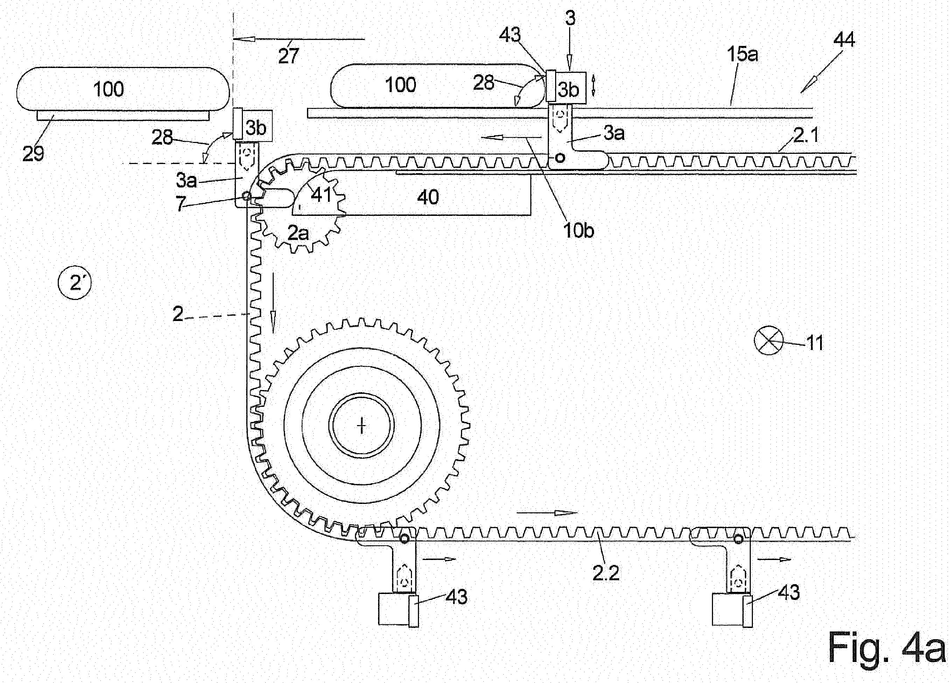

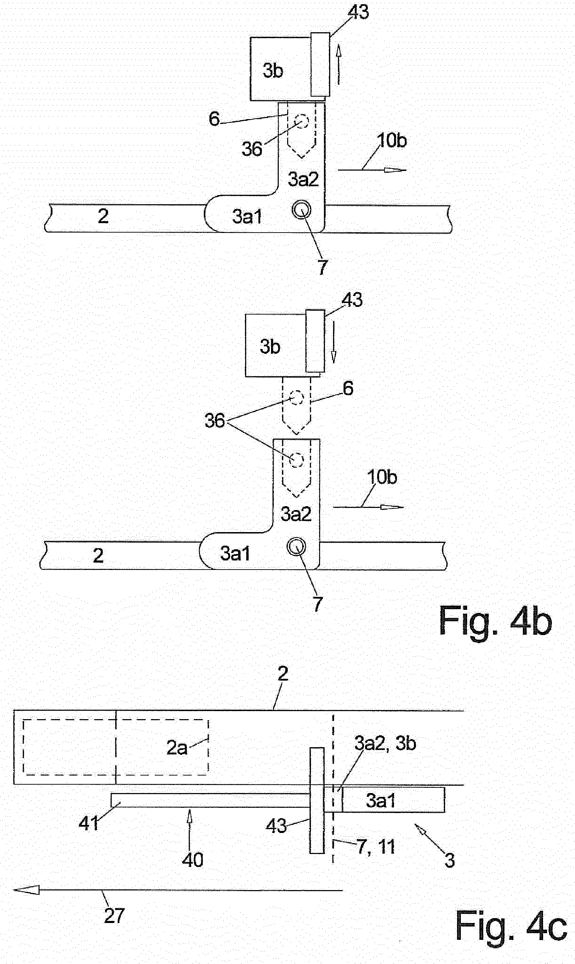

- Fig. **4**c:: die Führung der Mitnehmer in der Aufsicht,

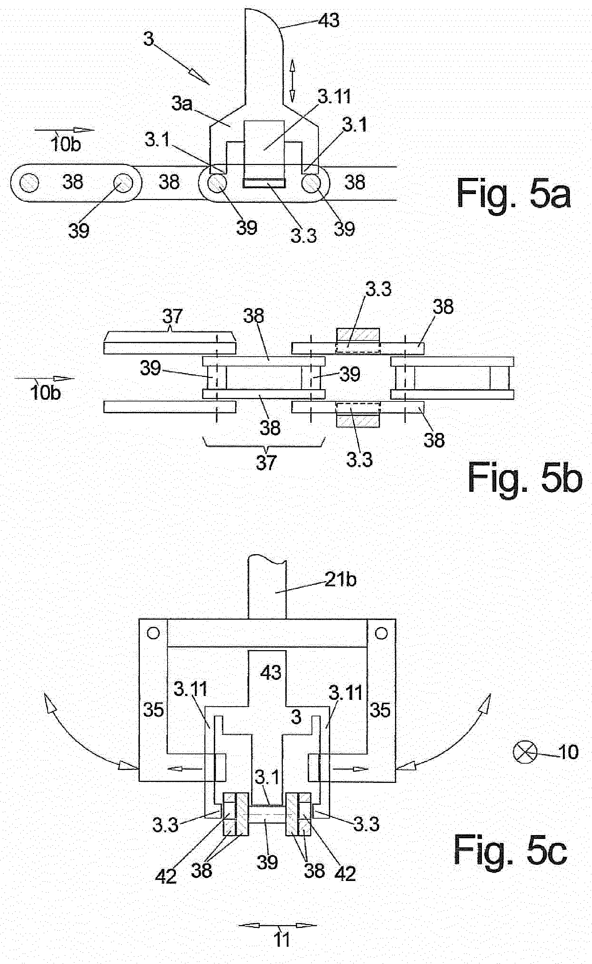

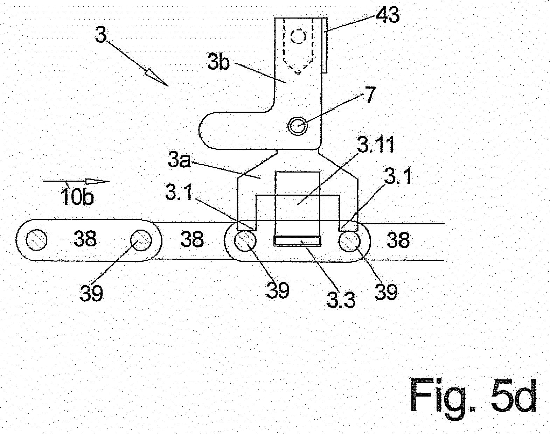

- Fig. **5**a - d:: eine zweite Bauform einer Zufuhrkette in Seitenansicht, Aufsicht und Frontansicht,

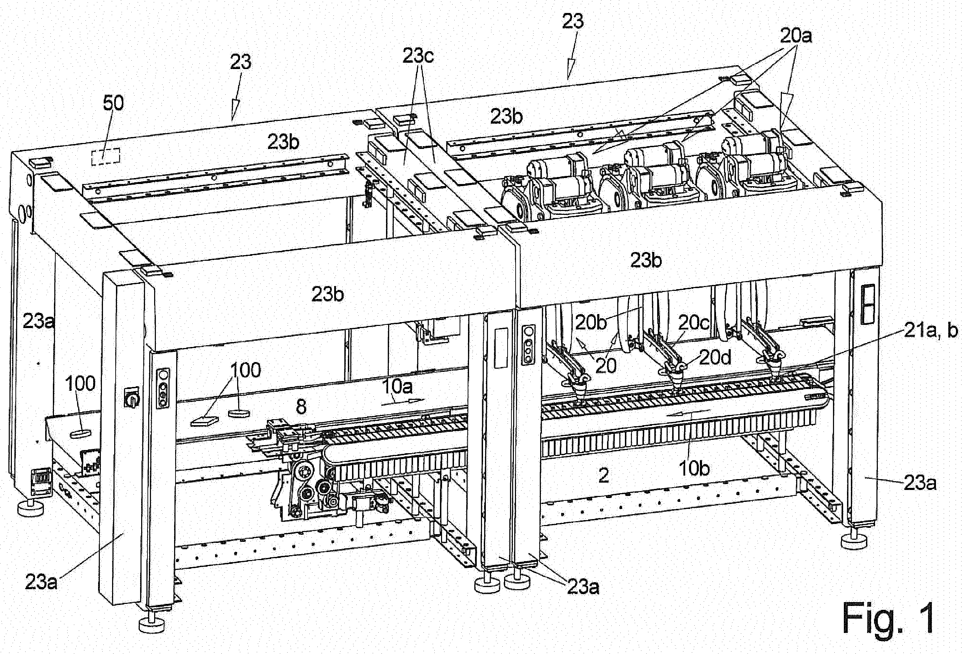

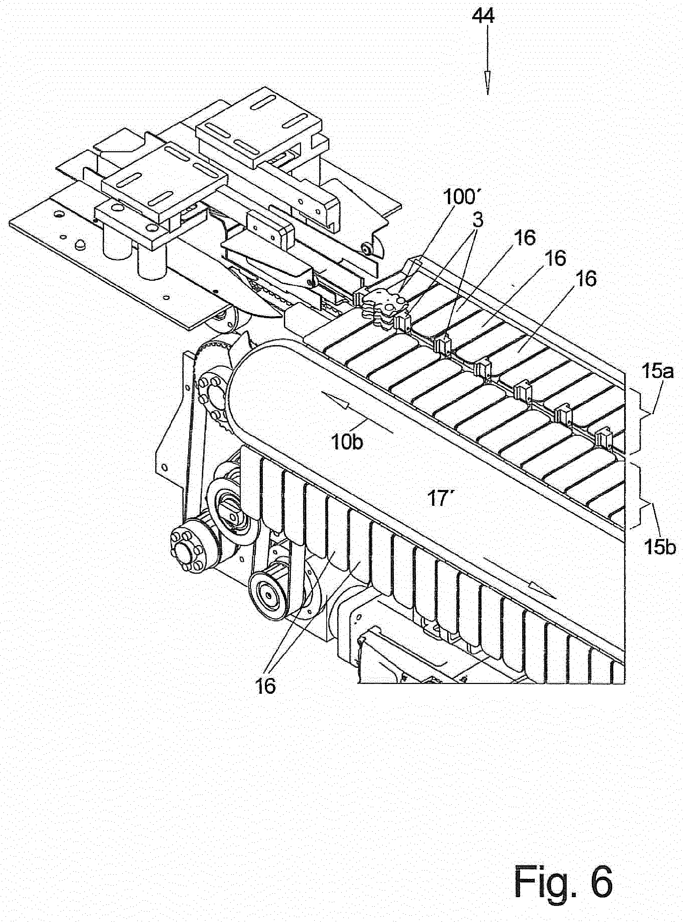

- Fig. **6**:: den Endbereich der Zufuhrketten-Einheit gemäß Figur **1** in perspektivischer Ansicht,

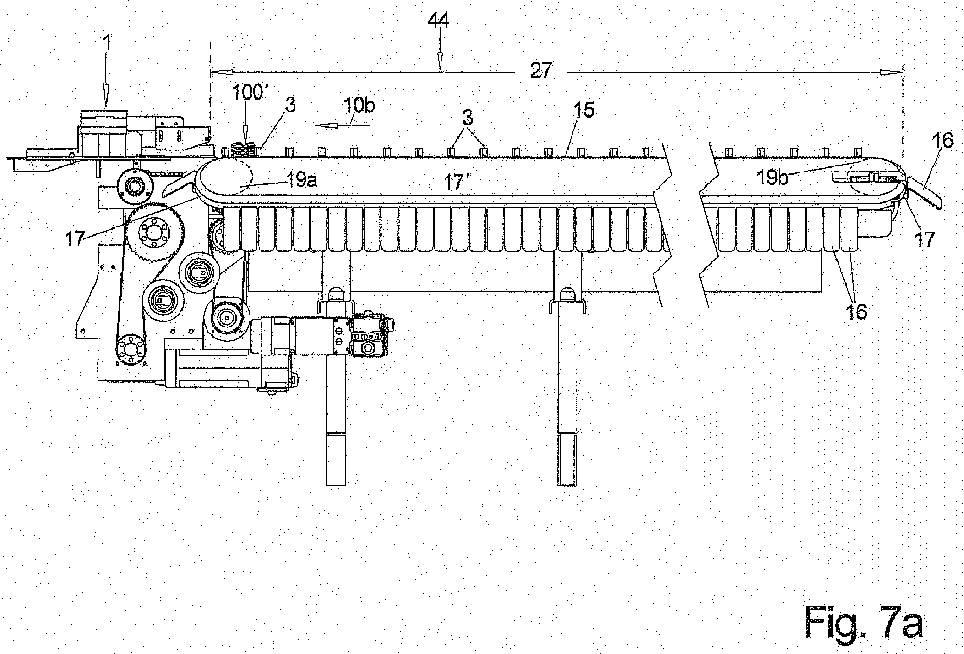

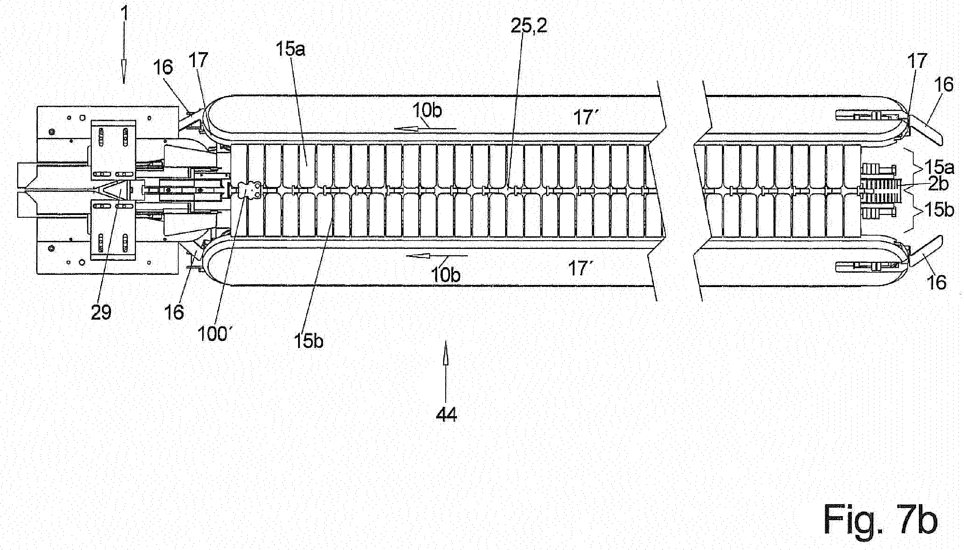

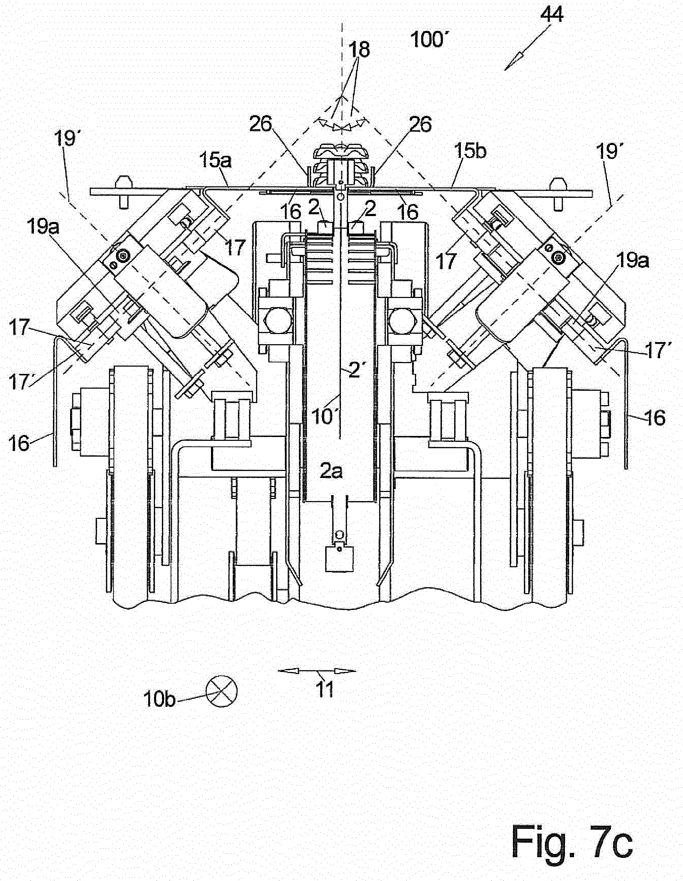

- Fig. **7**a, b, c:: die Förderstrecke der Zufuhrketten-Einheit mit Zufuhrkette und Auflagefläche gemäß Figur **1** in Seitenansicht, Aufsicht und Frontansicht.

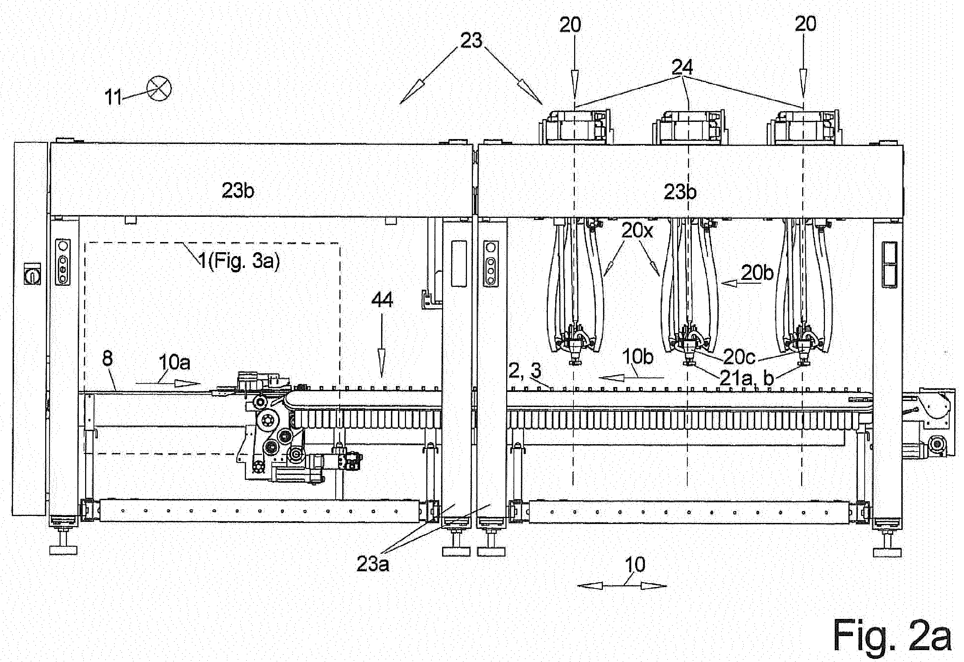

Die **Figuren 1** sowie **Figuren 2a****-c** zeigen die gesamte Schlauchbeutel-Maschine.

Wie am besten **Figur 1** erkennen lässt, ist das Maschinengestell modulartig aufgebaut aus mehreren hintereinander angeordneten und miteinander verbundenen Gestell-Modulen **23,** wovon jedes aus vier in der Aufsicht betrachtet im Rechteck angeordnet Säulen **23a** besteht, die vor allem in ihrem oberen Endbereich miteinander verbunden sind über Längsbalken **23**b und Querbalken **23**c.

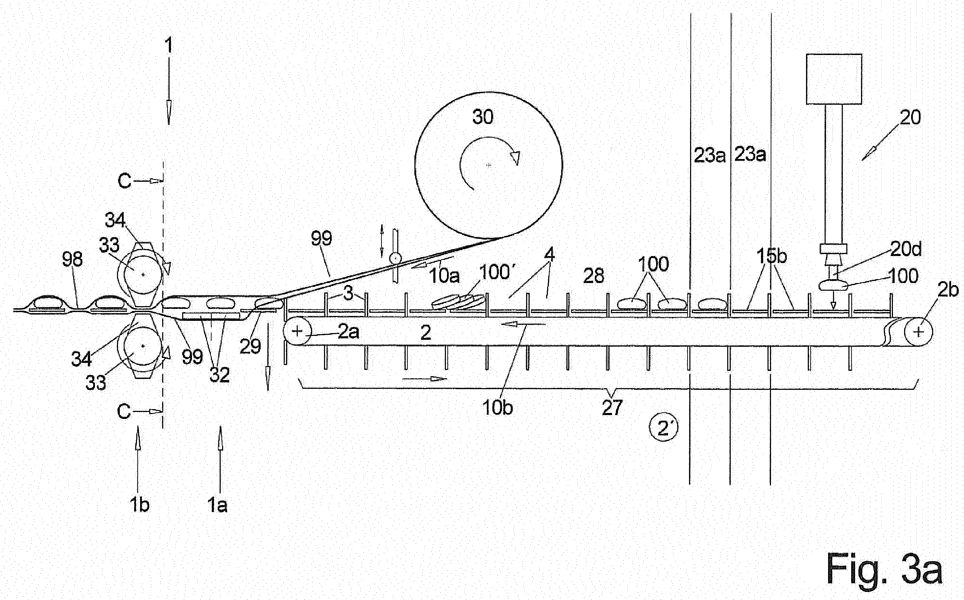

Etwa in der Mitte der Höhe der Gestell-Module **23** verläuft in Anreih-Richtung der Gestell-Module **23** und durch alle Gestell-Module **23** hindurch das Produktband **8,** auf dessen etwa horizontaler Oberseite Produkte **100** unregelmäßig verteilt aufliegend von links nach rechts - in dessen Laufrichtung **10**b - herangeführt werden. Die Produkte **100** werden mittels den in **Figur 1** im rechten Gestell-Modul **23** angeordneten Pickern **20** in die in Blickrichtung der **Figur 1** etwa auf gleicher Höhe und parallel dazu, vor dem Produktband **8** in Gegenrichtung, seiner Laufrichtung **10**b, laufende Produktkette **2** eingelegt, meist einzeln oder manchmal auch in Produktgruppen **100',** wie in **Figur 3a** an einer Stelle dargestellt.

Die Picker **20** sind in diesem Fall als Arm-Roboter ausgebildet, also eine Bauform, bei der gelenkig miteinander verbundener Oberarm **20**b, Unterarm **20**c und Roboterhand **20**d einen Roboterarm **20**x bilden, der an einer Roboterbasis **20**a um eine Haupt-Schwenkachse **20.1** verschwenkbar ist.

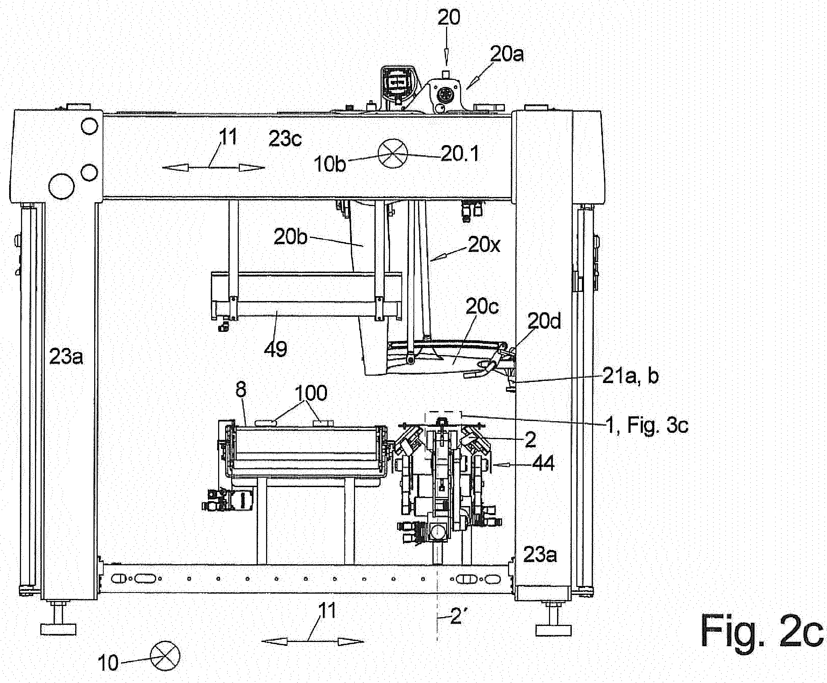

Die Roboter-Basis **20**a wird an den Längs- und Querbalken **23**b, c, also im oberen Bereich des jeweiligen Gestell-Moduls **23**, befestigt, und von dort ragen die Roboterarme **20**x nach unten, wie am besten in **Figur 2c** zu erkennen, sodass das an der Roboterhand **20**d befestigte Werkzeug **21**a oder **21**b, welches in der Aufsicht betrachtet in einem bestimmten Arbeitsbereich **20**' bewegbar ist und auch gemäß **Figur 2c** in seiner Höhenlage so, dass es sowohl auf dem Produktband **8** liegenden Produkte **100** ergreifen, als auch auf der daneben im Gegenlauf laufende Produktkette **2** ablegen kann.

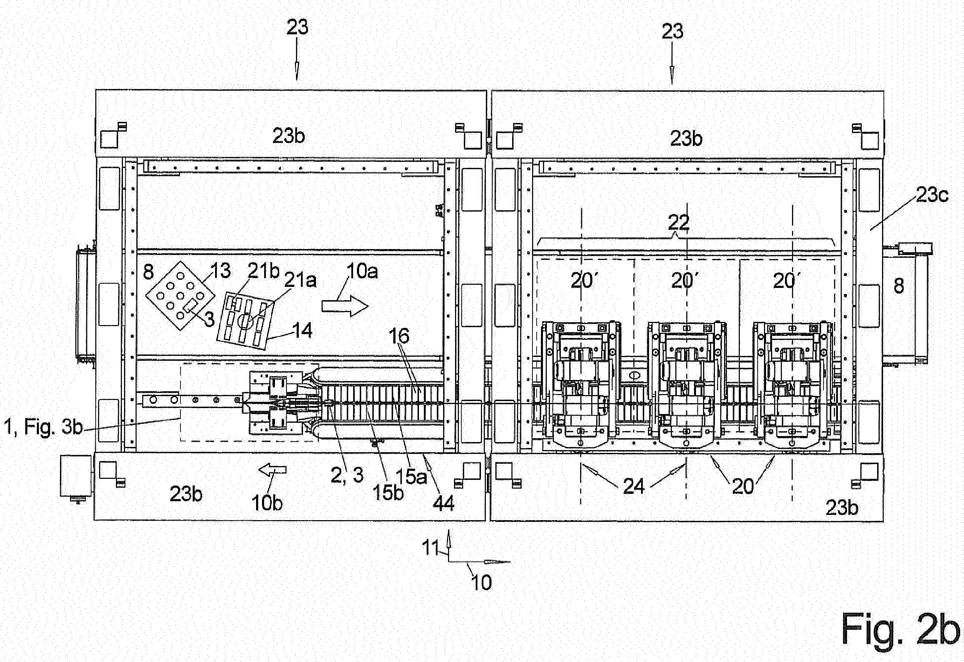

Diese Haupt-Schwenkachse **20.1** verläuft (siehe **Figur 2c**) in Laufrichtung **10**b der Zufuhrkette **2** und des Produktbandes **8.** Die Armebene **24,** in der sich der Roboterarm **20**x somit hauptsächlich bewegt - aus der heraus begrenzte Auslenkungen des Roboterarmes **20**x möglich sind - verläuft somit lotrecht zu dieser Haupt-Schwenkachse **20.1** senkrechtstehend quer zu der Laufrichtung **10**b bzw. **10a,** wie in **Figur 2b** ersichtlich.

Jeder der Picker **20** besitzt - in der Aufsicht betrachtet - einen Arbeitsbereich **20**', in dem das an ihm befestigte Werkzeug und damit ggfs. ein daran hängendes Produkt **100** bewegt werden kann, und dieser Arbeitsbereich **20'** erstreckt sich in Querrichtung **11** über die Breite des Produktbandes **8** als auch der Zufuhrkette **2** und die daneben befindlichen Auflage-Teile **15**a, b hinweg, und schließen sich in Längsrichtung **10** vorzugsweise nahtlos aneinander an.

Dadurch, dass die Armebene **24** vertikal angeordnet ist, benötigen die als Roboter ausgebildeten Picker **20** in Längsrichtung **10** nicht mehr Raum als die Erstreckung ihres Arbeitsbereiches **20'** in dieser Richtung, sodass die Picker **20** in Längsrichtung sehr eng beabstandet zueinander angeordnet werden können und dadurch der Umsetzbereich **22** entsprechend kurz ausfällt, in diesem Fall in einem einzigen Gestell-Modul **23** Platz findet.

Die Zufuhrkette **2** der Zufuhrketten-Einheit **44** bewegt die in sie eingelegten Produkte **100** in Durchlaufrichtung **10**b der Zufuhrkette **2** in den Figuren vom rechten Gestell-Modul **23** nach links zur Schlauchbeutel-Baugruppe **1,** die sie dort in Schlaubeutel verpackt. Die Schlauchbeutel-Baugruppe **1** ist in den **Figuren 2a** **- c** nur hinsichtlich ihrer Positionierung angedeutet und konkret in den **Figuren 3a** **- c** dargestellt.

Auf dem Produktband **8** werden - wie in **Figur 1** dargestellt - im normalen Betrieb die zu verpackenden Produkte **100** herangeführt.

Wie in **Figur 2b** dargestellt, können auf dem Produktband **8** jedoch - wenn eine Formatumstellung der Schlauchbeutel-Maschine erforderlich ist - statt dessen ein Mitnehmer-Magazin **13** mit teilweise darin aufgenommenen Mitnehmern **3** und/oder ein Werkzeug-Magazin **14** mit darin teilweise aufnehmbaren Werkzeugen **21**a, b für die Picker **20** herangeführt werden.

Die Magazine **13, 14** weisen hierfür ausgebildete Aufnahmeöffnungen für Mitnehmer **3** bzw. Werkzeuge **21**a, b auf, sodass die Picker **20** das momentan an ihnen befindliche Werkzeug in dem Werkzeug-Magazin **14** in einer leeren Aufnahmeposition ablegen und durch Abkuppeln von dem Roboterarm **20**xlösen können und anschließend ein anderes im Werkzeug-Magazin **14** befindliches Werkzeug durch Ankuppeln aufnehmen und aus dem Werkzeug-Magazin **14** entnehmen können.

Mit Hilfe eines solchen, am Roboterarm **20**x, also dessen Roboter-Hand **20**d, befestigten Mitnehmer-Werkzeuges **21**b, welches spezifisch ausgestaltet ist zum Ergreifen eines Mitnehmers **3,** sei es im Mitnehmer-Magazin **13** oder an der Zufuhrkette **2,** kann der entsprechende Picker von der Zufuhrkette **2** die dort montierten Mitnehmer **3** lösen, und entweder im Mitnehmer-Magazin **13** ablegen und von dort einen anderen Mitnehmer aufnehmen und an der Zufuhrkette **2** befestigen oder den von der Zufuhrkette **2** entfernten Mitnehmer **3**lediglich an anderer Stelle der Zufuhrkette **2** an dieser befestigen.

Wie am besten in **Figur 2b** zu erkennen, erstreckt sich als Zufuhrketten-Einheit beidseits der Zufuhrkette **2** und deren Mitnehmern **3** eine Auflagefläche, auf der die darauf aufliegenden, in Figur **2**b nicht dargestellten, Produkte von den Mitnehmern **3** in Laufrichtung **10**b der Zufuhrkette **2** vorwärts geschoben werden.

Gestaltung und Funktion werden in den vergrößerten Darstellungen der **Figuren 7a-d** erläutert.

(Evtl. Merkmale der schaltschranklosen Maschine hier einzeichnen/beschreiben).

In **Figur 2c** ist ferner der in Querrichtung **11** verlaufende, oberhalb des Produktbandes **8** angeordnete Produktscanner **49** zu erkennen, der in **Figur 1** am linken Ende des Produktbandes **8** angeordnet ist und Position und Drehlage sowie Form und ggf. auch Höhe und/oder Volumen aller auf dem Produktband **8** in die Schlauchbeutelmaschine, also insbesondere in den Umsetzbereich **22,** einlaufenden Gegenstände, seien es Produkte **100,** Produktgruppen **100',** ein Mitnehmer-Magazin **13** oder ein Werkzeug-Magazin **14,** detektiert und an die Steuerung **50** meldet.

Dabei ist der Produktscanner **49** auch in der Lage, z.B. die Position von Mitnehmern **3** oder Werkzeugen **21**a, b innerhalb des jeweiligen Magazins **13,14** zu detektieren sowie freie Aufnahmepositionen in diesen Magazinen **13, 14** und vorzugsweise auch die Form und damit die Art des dort befindlichen Mitnehmers **3** bzw. Werkzeuges **21**a, b zu detektieren.

Im übrigen wird beim Ankoppeln eines Werkzeuges an einem Picker **20,** beispielsweise den Roboterarm **20**x eines am Roboter ausgebildeten Pickers, auch aus einer Energie-Verbindung auch eine Datenverbindung zwischen Picker **20** und Werkzeug hergestellt, und dabei ggfs. Auch eine im Werkzeug vorhandene Kennung an den Picker übermittelt, sodass dieser der Steuerung **50** meldet, welche Art von Werkzeug momentan an ihm angekoppelt ist. Dadurch kann die Steuerung das Vorhandensein des richtigen Werkzeuges am jeweiligen Picker **20** detektieren.

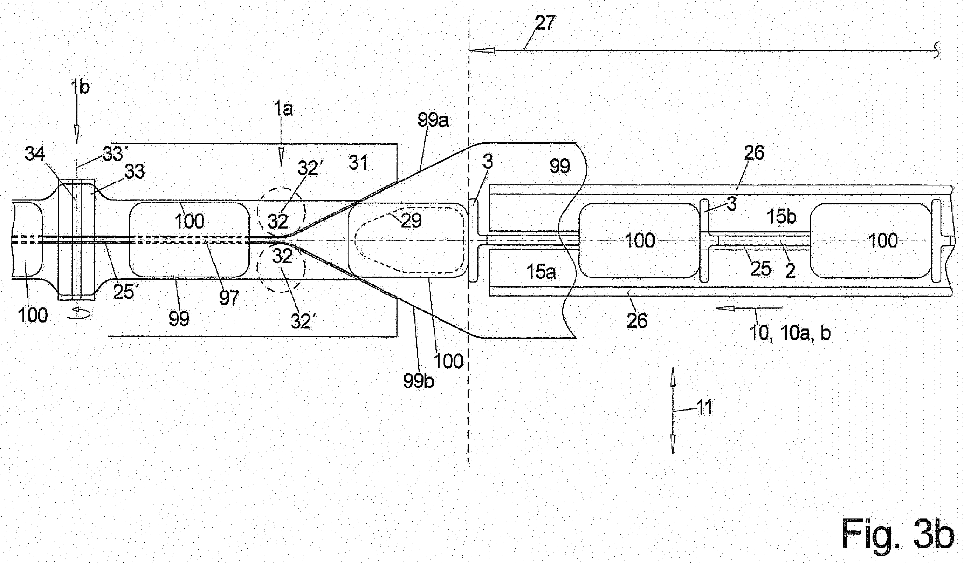

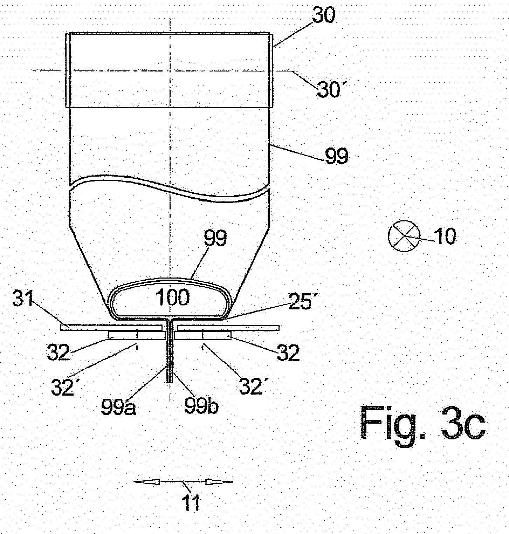

In den **Figuren 3a****,** **b****,** **c** ist vor allem die Schlauchbeutel-Baugruppe 1 vergrößert dargestellt:

Wie bereits aus **Figur 2b** **und c** ersichtlich, läuft die Zufuhrkette **2** in einer vertikal stehenden Umlaufebene **2'** um, welche die Zeichenebene der **Figur 3a** ist, zwischen einer stromabwärtigen Umlenkrolle **2**a und einer stromaufwärtigen Umlenkrolle **2**b, von denen mindestens eine angetrieben ist um die Zufuhrkette in der gewünschten Weise in Bewegung zu setzen.

Betrachtet quer zu dieser Umlaufebene **2'** wie in **Figur 3a****,** stehen die Mitnehmer **3,** die an der Zufuhrkette **2** befestigt sind, von der endlos umlaufenden Zufuhrkette **2** nach außen ab, ragen also vom Obertrum der Zufuhrkette **2** aus nach oben und erstrecken sich durch einen Schlitz in der Auflagefläche für die Produkte **100** über diese Auflagefläche hinaus, um die darauf liegenden Produkte **100** oder Produktgruppen **100'** auf der Auflagefläche vorwärts zu schieben, die sich in Form von Auflage-Teilen **15**a, b gemäß der Aufsicht der **Figur 3b** beidseits des Schlitzes **25** für die Mitnehmer **3** verläuft, etwas oberhalb der Zufuhrkette **2.**

Oberhalb des Schlitzes **25** sind die Mitnehmer **3** in der Regel verbreitert und ragen seitlich über die Breite des Schlitzes **25** hinaus, um die Produkte zuverlässig vorwärts schieben zu können, wobei an den Auflageteilen **15a**, b ebenfalls in Längsrichtung **10** verlaufend Seitenführungen **26** angeordnet sind, deren gegenseitiger Abstand möglichst genau an die Breite der Produkte **100** angepasst ist, ebenso wie auch die Breite - in Querrichtung **11** gemessen - der Mitnehmer **3** an die Breite der Produkte **100** angepasst ist.

Im normalen Betrieb der Schlauchbeutelmaschine ist es von essentieller Bedeutung, dass in jedes der - zwischen den in Längsrichtung **10** beabstandeten Mitnehmern **3** gebildeten - Gefache **4** der Zufuhrkette **2** jeweils meist nur ein Produkt **100** eingelegt ist, sodass die Darstellung in **Figur 3a****,** dass in einem Gefach ein einzelnes Produkt **100,** im anderen dagegen eine Produktgruppe **100'** liegt, lediglich der Veranschaulichung dient aber nicht im realen Betrieb auftreten wird.

Gegen Ende der Förderstrecke **27** der Zufuhrkette **2,** also der Strecke, über die sich die Mitnehmer **3** der Zufuhrkette **2** bewegen können, tauchen die Mitnehmer **3** durch das Herumführen um die stromabwärtige Umlenkrolle **2**a nach unten weg und verlieren dadurch den Kontakt zu dem vor ihm hergeschobenen Produkt **100.**

Wie **Figur 3a** zeigt - und später anhand der **Figuren 4a****,** **b** näher erläutert wird - soll der Mitnehmer **3** denselben Aufrechtwinkel **28,** den er während des Hauptteiles der Förderstrecke **23** zur horizontalen Ebene eingenommen hat, beim Abtauchen um die Umlenkrolle **2**a herum nach unten solange beibehalten, wie er noch in Kontakt mit dem Produkt **100** steht, also bis die Oberkante der Kontaktfläche **43** des Mitnehmers **3** unter das Niveau der Auflagefläche für die Produkte abgetaucht ist, um ein Beschädigen des Produktes dabei zu vermeiden.

Wie am besten **Figur 3b** in der Aufsicht zeigt, schiebt der nach unten abtauchende Mitnehmer **3** am Ende der Förderstrecke **27** das Produkt **100** auf eine Ablagefläche **29,** die in der Schlauchbeutelmaschine feststehend, aber einstellbar, montiert ist, und sich stromabwärts der Auflage-Teile **15**a, b befindet, vorzugsweise auf gleicher Höhe oder geringfügig niedriger, und eine horizontale Auflagefläche für das darauf abzulegende Produkt **100** darstellt. Vorzugsweise ist die Ablagefläche **29** in der Aufsicht betrachtet kleiner als das Produkt **100.**

Von dieser Ablagefläche **29** wird das Produkt **100** weiter transportiert und ins Innere des entstehenden Folienschlauches **99** eingebracht, indem von einer Vorratsrolle **30,** die sich mit ihrer Drehachse quer verlaufend oberhalb des Endbereiches der Zufuhrkette **2** befindet, eine Folienbahn **99** abgezogen und schräg in Durchlaufrichtung **10**a der Folie in diesem Bereich nach unten geführt wird, sodass die Folienbahn **99** auf der Oberseite des auf der Ablagefläche **29** abgelegten Produktes **100** aufdrückt und durch das Vorwärts-Transportieren der Folienbahn **99** das Produkt **100** mitnimmt und auf die Oberseite einer nachfolgenden Schlauchbeutelplatte **31** schiebt, die in Laufrichtung **10** verlaufend in der Mitte einen Schlitz **25'** besitzt.

Denn während dieses Weiterschiebens der Produktes **100** werden die bereits vor der Kontaktierung mit dem Produkt **100** auf der Ablagefläche **29** nach seitlich unten bewegten Längsränder **99**a, b der Folienbahn **99** gegeneinander angenähert und in den Schlitz **25'** eingeführt, sodass sich - siehe **Figur 3a** und vor allem **Figur 3c** - die Seitenränder **99**a, b der Folienbahn durch den Schlitz **25'** nach unten erstrecken, während sich der schlauchartige Rest des Querschnitts der Folienbahn **99** oberhalb der Schlauchbeutel-Platte **31** befindet und das darin befindliche Produkt **100** umgibt und bei der Bewegung des Folienschlauches **99** mit bewegt.

Um in diesem Zustand - bei laufender Folienbahn **99** - diese beiden Längsränder **99**a, b der Folienbahn dicht gegeneinander zu versiegeln, laufen diese unterhalb der Schlauchbeutelplatte **31** zwischen zwei um vertikale Rotationsachsen **32'** rotierende, knapp unterhalb der Schlauchbeutelplatte **31** angeordnete Siegelrollen **32** durch.

Die Siegelrollen **32** sind in Querrichtung **11** gegeneinander vorgespannt und drücken die beiden aneinander liegenden Längsränder **99**a, b gegeneinander und da die Siegelrollen **32** auf eine für die jeweiliges Folienmaterial notwendige Siegeltemperatur erwärmt sind, wird das thermoplastische Material der Folienbahn **99** in diesem Bereich soweit erwärmt, dass die beiden Längsränder **99**a, b durchgängig dicht miteinander verklebt werden und eine Längs-Siegelnaht **97** bilden, wodurch ein umfänglich geschlossener Folienschlauch gebildet wird, in dem sich in durch die Zufuhrkette **2** definierten Abständen in Laufrichtung **10** die Produkte **100** befinden.

Zur Erzeugung von einzelnen Schlauchbeuteln **96,** in dem sich jeweils z.B. ein Produkt befindet, wird anschließend weiter stromabwärts dieser Beutelschlauch mittels einer Quersiegel-Einheit **1**b eine Quer-Siegelnaht **98** erzeugt. Zu diesem Zweck sind oberhalb und unterhalb des durchlaufenden Folienschlauches **99** je eine Quer-Siegelwalze **33** angeordnet, deren Rotationsachse horizontal und in Querrichtung **11** verläuft.

Indem die Quer-Siegelwalzen **33** betrachtet in Richtung ihrer Rotationsachse **33'** keine runde Außenkontur, sondern eine eher elliptische Außenkontur besitzen, durch die zwei oder mehr Siegel-Vorsprünge **34** gebildet werden, die am weitesten radial von der Rotationsachse **33'** vorstehen, kann bei gegenläufiger Drehrichtung und synchronem Antrieb der Quer-Siegelwalzen **33** erreicht werden, dass immer genau zwei gegeneinander gerichtete Siegel-Vorsprünge **34** sich von oben und unten gegen den Folienschlauch **99** annähern bis auf einen solchen geringen Abstand, dass der Folienschlauch dazwischen flach gequetscht und Ober- und Unterseite des Folienschlauches **99** gegeneinander gepresst und durch die erhitzten Siegel-Vorsprünge **34** in Querrichtung durchgehend dicht miteinander verklebt werden.

Damit ist der Folienschlauch **99** nun in einzelne Schlauchbeutel **96** unterteilt, in denen sich jeweils z.B. ein Produkt **100** befindet und zum Auftrennen in einzelne, getrennte Schlauchbeutel **96** wird weiter stromabwärts der Folienschlauch **99** im Bereich der Quersiegelnaht **98** durchtrennt, was nicht mehr dargestellt ist.

Die **Figuren 4a****,** **b** und **5a-d** zeigen die Gestaltung und Funktion der Zufuhrkette **2,** die die Mitnehmer **3** trägt.

Die **Figur 4a** zeigt einen Teil der Zufuhrketten-Einheit **44,** nämlich das Ende der Förderstrecke **27** der endlos umlaufenden Zufuhrkette **2** mit Blick auf deren Umlaufebene **2'.**

Die Zufuhrkette **2 -** mit diesem Begriff sollen alle geeigneten Förderelemente umfasst sein - ist in diesem Fall als Zahnriemen ausgebildet und das horizontal laufende Obertrum **2.1** wird am Ende der Förderstrecke **27** über eine erste Umlenkrolle **2**a in diesem Fall im rechten Winkel nach unten umgelenkt und über eine etwa darunter angeordnete weitere Umlenkrolle **2**b in zum wiederum horizontal zurücklaufenden Untertrum **2'.**

Die Mitnehmer **3** ragen in der Umlaufebene **2'** von der Zufuhrkette **2** nach außen ab, und entlang des Obertrums **2'** in diesem Fall senkrecht nach oben.

Sie erstrecken sich dabei durch einen am besten in **Figur 7b** sichtbaren Schlitz **25,** der in Längsrichtung 10b verlaufend zwischen den seitlich davon angeordneten Auflageteilen **15**a, b gebildet wird, bis über die Oberseite der Auflageflächen **15**a, b hinaus und können dadurch die im Bereich darüber in Querrichtung **11** über den Schlitz **25** hinweg auf den Auflageteilen **15**a, b liegende Produkt vorwärts schieben, in diesem Fall nach links.

Wenn diese Mitnehmer **3** um die Umlenkrolle **2**a am Ende des Obertrums **2.1** in Laufrichtung **10**b herumgeführt werden, würden sie bei unbeweglicher Befestigung am Zahnriemen **2** mit ihrer in Laufrichtung nach vorn gerichteten Kontaktfläche **43** eine Schwenkbewegung um den Mittelpunkt der Umlenkrolle **2**a vollziehen, und damit die Kontaktfläche **43** in diesem Bereich zunehmend mit ihrer Oberkante gegen die Rückseite des Produktes **1** drücken, und an diesem entlang nach unten schaben, was die Produkte **100** beschädigen kann.

Um zu erreichen, dass die beim Umlaufen um diese Umlenkrolle **2**a nach unten abtauchenden Mitnehmer **3** bis zum Abtauchen unterhalb der Höhe der Auflage-Teile **15**a, b ihren Aufrechtwinkel **28** zwischen der Kontaktfläche **43** und der Horizontalen beibehalten, sind die Mitnehmer **3** zunächst einmal an der Zufuhrkette **2** gelenkig um eine in Querrichtung **11** verlaufende Schwenkachse **7** ausgebildet. Um Größe und Form der Kontaktfläche **43** je nach zu handhabendem Produkt **100** anpassen zu können, sind die Mitnehmer **3** zweiteilig ausgebildet mit einem Basisteil **3**a, welches über die Schwenkachse **7** an der Zufuhrkette **2** befestigt ist und das Mitnehmerteil **3**b, welches sich ganz oder überwiegend oberhalb der Auflageteile 15a, b befindet und am Basisteil **3**a lösbar befestigt ist.

In diesem Fall ist das Mitnehmerteil **3**b von oben in die obere Stirnfläche des Basisteiles **3**a einsteckbar und verrastbar - wie in **Figur 4b** auch in getrenntem Zustand dargestellt -, indem das Mitnehmerteil 3b an seiner Unterseite einen Einsteckzapfen **6** aufweist, der in eine entsprechende Ausnehmung des Basisteiles **3**a passt, und zwischen beiden ist eine Rastvorrichtung **36** vorhanden, beispielsweise eine bekannte, mittels Federkraft vorgespannte Rastkugel, die wahlweise im Basisteil **3**a oder im Mitnehmerteil **3**b vorhanden sein kann und in eine entsprechende Rastvertiefung des anderen Teiles hinein mittels Federkraft vorgespannt ist und einrastet.

Das Basisteil **3**a ist in der Blickrichtung der Figur **4**a und **4**b, also in Seitenansicht auf die Umlaufebene **2'** der Zufuhrkette **2,** der Querrichtung **11,** L-förmig ausgebildet mit einem nach oben, also bzgl. der umlaufenden Zufuhrkette **2** nach außen, weisenden Einsteckschenkel **3**a**2**, in dem sich die Aufnahme- und Rastvorrichtung für das Mitnehmerteil befindet, und einen dazu - vorzugsweise an dessen unterem Ende - im Winkel sich etwa in Verlaufsrichtung der Zufuhrkette **2** entgegen deren Laufrichtung **10**b erstreckenden Führungsschenkel **3**a**1**.

Der Mitnehmer **3**, hier das Basisteil **3**a, kann in einer Aussparung der Zufuhrkette **2** angeordnet sein, ist jedoch vorzugsweise in der Aufsicht betrachtet seitlich an dieser befestigt, wie die Aufsicht der **Figur 4c** zeigt.

Gegen Ende der Förderstrecke **27** ist auf Höhe der Unterkante des Führungsschenkels **3**a**1** eine Kulissenführung **40** angeordnet, deren Oberseite und in Richtung Ende der Förderstrecke eine Stirnfläche in Form einer Führungskurve **41,** die von der Oberseite zum am vorderen Ende der Unterseite in Form eines Bogens konvex gekrümmt ist, so angeordnet, dass zu Beginn des Herumlaufens der Schwenkachse **7** eines Mitnehmers **3** um diese Umlenkrolle **2**a, zunächst die Unterkante und dann die hintere, vorzugsweise gerundete, freie Ende des Führungsschenkels **3**a**1** durch die Führungskurve **41** so geführt wird, dass der Mitnehmer **3** seine Winkelstellung bezüglich der Schwenkachse **7** beibehält - und damit der Aufrecht-Winkel **28** ebenfalls beibehalten wird - bis die Oberkante des Mitnehmers **3,** hier also des Mitnehmerteiles **3**b, unter das Niveau der Oberseite der Auflageteile **15**a, b abgetaucht ist und den Kontakt mit dem bisher vor sich her geschobenen Produkt **100** verliert.

Dadurch sind Beschädigungen an der Rückseite des Produktes **100** durch das Mitnehmerteil **3**b vermieden.

Wie **Figur 4a** auch zeigt, enden die Auflage-Teile **15**a, b noch vor Ende der Förderstrecke **27** in Transportrichtung **10**b, um den Mitnehmerteil **3**b des Mitnehmers **3,** welcher gemäß **Figur 7b** in aller Regel breiter ist als der Schlitz **25,** in dem der Mitnehmer 3 läuft, nach unten abtauchen kann.

Stromabwärts hinter dem Ende der Auflageteile **15**a, b befindet sich auf gleichem oder geringfügig niedrigerem Niveau die stillstehende Auflagefläche **29,** auf welche das Produkt **100** vom Mitnehmer **3** am Ende der Förderstrecke **27** aufgeschoben wird, bevor der Mitnehmer **3** den Kontakt zum Produkt **100** verliert, um von dort mit Hilfe der an ihm anliegenden, in **Figur 4a** nicht dargestellten Folienbahn **99** weiter transportiert zu werden.

Die **Figuren 5a****-d** zeigen eine normale Gliederkette als Zufuhrkette **2** und eine andere Art der Befestigung von Mitnehmern **3** an einer solchen Gliederkette:

Eine solche Gliederkette besteht aus in Längsrichtung **10** beabstandeten, quer verlaufenden, zylindrischen Kettenstegen **39,** an deren linken und rechten Ende jeweils eine äußere und eine innere Kettenwange **38** angreifen, wobei die innere oder die äußere, meist die äußere, Kettenwange **38** verschwenkbar um die Querachse des Kettensteges **39** ist.

Jede Kettenwange **38** verbindet zwei solcher Kettenstege **39**in jedem dieser Endbereiche.

An einer solchen Gliederkette können spezifisch gestaltete Mitnehmer **3** von oben, also in deren Umlaufebene **2'** von außen, auf die Gliederkette aufgesteckt und verrastet werden wie am besten in **Figur 5a** **- c** ersichtlich:

Von dem Zentralkörper des Mitnehmers **3** ragen Anlagearme **3.1** nach unten, die in Längsrichtung **10** beabstandet sind, mit einem solchen Längs-Abstand, dass sie mit ihren freien stirnseitigen Anlageflächen gerade auf je einem von zwei benachbarten Kettenstegen **39** aufliegen können, ohne beim Herumlaufen der Kette um ein Zahnrad mit dem Zahnrad zu kollidieren.

Zwei mittlere, elastische Rastarme **3.11** ragen in der Mitte des LängsAbstandes zwischen den Anlagearme **3.1** ebenfalls von dem Zentralkörper nach unten, in Querrichtung beabstandet etwa um die Breite eines Kettengliedes **37.** An ihrem unteren Ende weisen die Rastarme **3.11** jeweils eine nach innen gerichtete Quer-Rastnase **3.3** auf, die in Richtung der gegenüberliegen Quer-Rastnase **3.3** gerichtet ist und in eine in der vorzugsweise außen liegenden Kettenwange **38** ausgebildete Rastöffnung passt und auf Grund der elastischen Vorspannung der Rastarme **3.11** auch in diesen verrrastet, wobei sich dabei die Rastarme **3.11** seitlich außen entlang der äußeren Kettenwangen **38** nach unten erstrecken.

Die Anlageflächen der Anlagearme **3.1** sitzen in diesem verrasteten Zustand auf den zwei benachbarten Kettenstegen **39** auf.

Am oberen Ende dieses vorzugsweise einstückigen Mitnehmers **3** ist die in Laufrichtung **10**b weisende Kontaktfläche **43** nach hinten fliehend gekrümmt, um beim Abtauchen unter die Auflagefläche die Rückseite des Produktes nicht zu beschädigen.

In **Figur 5c** ist ferner dargestellt, wie ein mit solchen Rastarmen, in diesem Fall den elastischen Rastarmen **3.11,** ausgestatteter Mitnehmer **3** von einem Mitnehmer-Werkzeug **21**b, welches beispielsweise an einem Roboterarm an dessen Werkzeughand **20**d befestigt sein kann, nicht nur gehalten, sondern die Rastarme **3.11** auch so weit auseinander gebogen werden können, dass der Mitnehmer **3** auf den Kettenwangen **38** von oben aufgesetzt und beim Loslassen mit seinen Quer-Rastnasen **3.3** nach innen in die Rastöffnung **42** einrasten.

Zu diesem Zweck kann ein solches Mitnehmer-Werkzeug **21**b zwei beidseits des Mitnehmers nach unten ragende, mit dem gewinkeltem und mit dem freien Ende nach innen gegen die Rastarme **3.11** gerichteten Greifer **35** besitzen, um in Längsrichtung **10** verlaufende Gelenke gesteuert gegenüber dem Hauptteil des Mitnehmer-Werkzeuges **21**b verschwenkt werden können zum Ergreifen oder Loslassen des Mitnehmers **3** an den Rastarmen **3.11.**

Der Vorteil dieser Ausführungsform einer Zufuhrkette als Gliederkette und andererseits der dargestellten oder einer ähnlich wirkenden Form von Mitnehmern **3** besteht darin, dass Mitnehmer an jedem Kettenglied - sofern an jedem Kettenglied **37** die entsprechende Rastöffnung **42** vorhanden ist - eingesetzt werden kann, also ein sehr geringer Minimalabstand zwischen den Mitnehmern zur Verfügung steht, und größere Abstände immer ein ganzzahliges Mehrfaches davon sind.

Bei der Ausführungsform gemäß **Figur 4a****-c** sind dagegen die Basisteile **3**a meist in einem deutlich größeren Abstand an der Zufuhrkette **2,** insbesondere ausgeführt als Zahnriemen, vorhanden, um den Herstellungsaufwand über die jeweils notwendige gelenkige Verbindung um die Schwenkachsen **7** für einen solchen Zahnriemen gering zu halten, was bei einer Gliederkette - bis auf das Vorhandensein der Rastöffnungen **42** - keine weiteren Zusatzarbeiten erfordert.

Der Nachteil der in den **Figuren 5a** **- c** beschriebenen Lösung besteht jedoch darin, dass ein so aufgesteckter, einstückiger Mitnehmer **3** nicht um eine quer verlaufende Schwenkachse gegenüber der Gliederkette **37** verschwenkbar ist.

Um die Beibehaltung des Aufrechtwinkels **28** beim Abtauchen des Mitnehmers unter das vorwärts geschobene Produkt am Ende der Förderstrecke zu ermöglichen - falls dies aufgrund des Produktes notwendig ist - weist ein solcher Mitnehmer **3** in einer weiteren Ausführungsform - wie in Figur 5d dargestellt - wiederum ein Basisteil **3**a auf das z.B. gemäß der Figuren **5**a - direkt an einem Kettenglied **37** befestigt ist.

Daran ist - nach oben aufragend - ein Mitnehmer-Teil **3**b um eine quer verlaufende Schwenkachse **7** verschwenkbar befestigt, welches insbesondere gestaltet ist wie in Figur **4**b und in gleicher Weise mit einer Führungsschiene zusammenwirken kann, um die Beibehaltung des Aufrechtwinkels **28** beim Abtauchen des Mitnehmers **3** zu ermöglichen. Beim Wechseln des Mitnehmers wird dieser also hier im Ganzen von der Gliederkette demontiert.

Aussehen und Zusammenwirken des Mitnehmerteiles **3**b mit einer Kulissenführung **40** können dann genauso gelöst werden wie anhand der **Figuren 4a****, b, c** beschrieben.

Die **Figuren 6** **sowie 7a - c** zeigen in vergrößerter Darstellung die Zufuhrketten-Einheit **44** ganz oder über nur einen Teil ihrer Förderstrecke **27,** über welche Produkte, hier eine Produktgruppe **100',** in Richtung der Schlauchbeutel-Baugruppe **1** gefördert werden, wobei es sich um mitlaufende Auflage-Teile **15**a, b beidseits des Schlitzes **25,** durch den die Mitnehmer **3** von der Zufuhrkette **2** darunter in dem Bereich oberhalb der Auflage-Teile **15**a, b ragen, ausgebildet sind.

Dabei sind die Auflage-Teile **15**a, b in Laufrichtung **10** unterteilt in einzelne Auflage-Abschnitte **16,** die allesamt jeweils an einer endlos umlaufenden Auflagekette **17** befestigt sind, von denen eine links und eine rechts der Zufuhrkette **2** angeordnet ist, und die jeweils in einer Umlaufebene **17'** umlaufen, in den **Figuren 7a****,** **b** eingezeichnet an der Abdeckung, die die Umlaufkette **17** abdeckt.

Wie **Figur 7b** **und** **7c** für eine relativ kleine Produktgruppe **100'** erkennen lässt, liegt die Produktgruppe **100'** mit ihrer Rückseite an dem Mitnehmer **3** an, der sie vorwärts schiebt und liegt mit ihrer Unterseite beidseits auf den Auflageteilen **15**a, b, also jeweils einem oder mehreren aneinander anschließenden Auflage-Abschnitten **16,** wie in **Figur 7b** **und** **7c** erkennbar, auf.

Deshalb wird in aller Regel die Umlaufkette **17** mit der gleichen Geschwindigkeit in Laufrichtung **10**b bewegt wie die Zufuhrkette **2,** um Relativbewegungen zwischen der Unterseite des Produktes oder hier der Produktgruppe **100** und der Oberseite der Auflage-Teile **15**a,b, also der Auflageabschnitte **16,** zu vermeiden.

Das wesentliche der Ausbildung dieser Förderstrecke zeigt **Figur 7c** betrachtet in Längsrichtung **10**b: Daraus wird ersichtlich, dass die Umlaufebenen **17'** der beidseits der Zufuhrkette **2** angeordneten Umlaufketten **17** in einem spitzen Winkel zur Umlaufebene **2'** der Zufuhrkette **2,** symmetrisch zur Umlaufebene **2'** der Zufuhrkette **2,** die gleichzeitig die Längsmittelebene **10'** der gesamten Förderstrecke ist, angeordnet sind.

Damit die an diesen Zufuhrketten **17** angeordneten Auflageabschnitte **16,** wenn sie mit Hilfe des Obertrums der Zufuhrkette **17** synchron mit den Mitnehmern **3** bewegt werden, eine horizontale Auflagefläche, also Oberseite besitzen, ragen die Auflageabschnitte **16** von der Umlaufkette **17** und deren Umlaufebene **17'** in einem entsprechenden Winkel ab.

Der Zweck dieser Anordnung ist am besten in **Figur 7b** erkennbar:

Sobald die Abschnitte **16** am Ende der Förderstrecke **27** in den Bereich der dortigen Umlenkrolle **19**a gelangen, werden sie nicht nur radial nach außen geschwenkt, sondern gleichzeitig aufgrund der Schrägstellung der Umlaufebene **17'** auch nach unten bewegt, sodass auf dem Höhenniveau der Auflageteile **15**a, b am Ende der Förderstrecke **27** unmittelbar nachgeordnet Raum für den Beginn der Schlauchbeutel-Baugruppe **1** besteht.

Diese weist bei der in den **Figuren 6** **und** **7a****-c** dargestellten Bauform einen für die vorliegende Erfindung nicht relevanten Zwischenförderer auf, der zwischen dem Ende Förderstrecke **27** der Zufuhrkette **2** und der fest montierten Auflagefläche **29** für die Produkte angeordnet sein kann.

### BEZUGSZEICHENLISTE

- **1**: Schlauchbeutel-Baugruppe
- **1a**: Längssiegel-Einheit
- **1b**: Quersiegel-Einheit
- **2**: Zufuhrkette
- **2.1**: Obertrum
- **2.2**: Untertrum
- **2a, b**: Umlenkrolle
- **2'**: Umlaufebene
- **3**: Mitnehmer
- **3a**: Basisteil
- **3b**: Mitnehmerteil
- **3a1**: Führungsschenkel
- **3a2**: Einsteckschenkel
- **3.1**: Anlagearm
- **3.11**: Rastarn
- **3.3**: Quer-Rastnase
- **4**: Gefach
- **5**: Produkt-Auflage
- **6**: Einsteckzapfen
- **7**: Schwenkachse
- **8**: Produktband
- **9**: Längsabstand
- **10a, b**: Längsrichtung, Durchlaufrichtung
- **10'**: Längsmittelebene
- **11**: Querrichtung
- **12**: vertikale Richtung
- **13**: Mitnehmer-Magazin
- **14**: Werkzeug-Magazin
- **15**: Auflagefläche
- **15**a, b: Auflage-Teil
- **16**: Auflage-Abschnitt
- **17**: Auflage-Kette
- **17'**: Umlaufebene
- **18**: Winkel
- **19**a, b: Umlenkrolle
- **19'**: Umlenkachse
- **20**: Umsetz-Roboter, Picker
- **20.1**: Hauptschwenkachse
- **20**x: Roboterarm
- **20**a: Roboter-Basis
- **20**b: Oberarm
- **20**c: Unterarm
- **20**d: Roboterhand
- **20'**: Arbeitsbereich
- **21**a: Produkt-Werkzeug
- **21**b: Mitnehmer-Werkzeug
- **22**: Umsetzbereich
- **23**: Gestell-Modul
- **23**a: Säule
- **23**b: Längsbalken
- **23**c: Querbalken
- **24**: Armebene
- **25**: Schlitz
- **26**: Seitenführung
- **27**: Förderstrecke
- **28**: Aufrecht-Winkel
- **29**: Ablagefläche
- **30**: Vorratsrolle
- **31**: Schlauchbeutelplatte
- **32**: Siegelrollen
- **32'**: Rotationsachse
- **33**: Quer-Siegelwalze
- **33'**: Rotationsachse
- **34**: Siegelvorsprung
- **35**: Greifer
- **36**: Rastvorrichtung, Rastkugel
- **37**: Kettenglied
- **38**: Kettenwange
- **39**: Kettensteg
- **40**: Kulissenführung
- **41**: Führungskurve
- **42**: Rastöffnung
- **43**: Kontaktfläche
- **44**: Zufuhrketten-Einheit

- **49**: Produktscanner
- **50**: Steuerung

- **96**: Schlauchbeutel
- **97**: Längs-Siegelnaht
- **98**: Quer-Siegelnaht
- **99**: Folienbahn, Folienschlauch
- **99**a,b: Längs-Rand
- **100**: Produkt
- **100'**: Produkt-Gruppe

## Patentansprüche

1. **Schlauchbeutel-Maschine** mit
- einer Schlauchbeutel-Baugruppe (**1**) mit einer Längssiegel-Einheit (**1**a) und einer Quersiegel-Einheit (**1**b), die Schlauchbeutel (**96**) mit darin aufgenommenen Produkten (**100**) oder Produktgruppen (**100**') aus einer in Längsrichtung (**10**a) laufenden Folienbahn (**99**) herstellt,
- einer Produkt-Zufuhrvorrichtung, insbesondere einem Produktband (**8**), zur Anlieferung der zu verpackenden Produkte (**100**) oder Produktgruppen (**100**'),
- einer Zufuhrketten-Einheit (**44**) mit einer Auflagefläche (**15**) für die Produkte (**100**) sowie einer in Längsrichtung (**10**b) laufenden, insbesondere endlosen, Zufuhrkette (**2**) mit daran in Längsabständen (**9**) beabstandeten Mitnehmern (**3**) zum vorwärtsbewegen der Produkte (**100**) über eine Förderstrecke (**27**),
- wenigstens einer Steuerung (**50**) zum Steuern der gesamten Schlauchbeutel-Maschine,**dadurch gekennzeichnet, dass**
- die Mitnehmer (**3**) lösbar an der Zufuhrkette (**2**) befestigt sind und von der in der Schlauchbeutel-Maschine montierten Zufuhrkette (**2**) von dieser jeweils wenigstens zum Teil gelöst und auch an unterschiedlichen Längspositionen an der Zufuhrkette (**2**) befestigt werden können,
- mehrere in Längsrichtung (**10**b) beabstandete Picker (**20**) entlang der Zufuhrkette (**2**) stromaufwärts von der Schlauchbeutel-Baugruppe (**1**) so angeordnet sind, dass sich sowohl die Zufuhrkette (**2**) als auch das Produktband (**8**) jeweils in deren Arbeitsbereich (**20**') befindet, und
- die Steuerung (**50**) in der Lage ist, einerseits die Laufgeschwindigkeit der Folienbahn (**99**) und andererseits die Laufgeschwindigkeit der Zufuhrkette (**2**) unabhängig oder abhängig voneinander und die Laufgeschwindigkeit der Zufuhrkette (**2**) in Abhängigkeit von der Anzahl der pro Zeiteinheit im Umsetzbereich (**22**) der Picker (**20**) ankommenden Produkte (**100**) zu steuern.

2. Schlauchbeutel-Maschine nach Anspruch **1**,
**dadurch gekennzeichnet, dass**
die Auflagefläche (**15**)
- entweder aus zwei zueinander fluchtenden Auflage-Teilen (**15**a, b) besteht, die in Längsrichtung (**10**b) vor dem Ende der Förderstrecke (**27**) der Zufuhrkette (**2**) enden und mit einem sich dazwischen in Längsrichtung (**10**b) erstreckenden Schlitz (**25**), durch den sich die Mitnehmer (**3**) hindurcherstrecken
- oder die Auflagefläche (**15**) jeweils Bestandteil der Mitnehmer (3) ist.

3. Schlauchbeutel-Maschine nach einem der vorhergehenden Ansprüche,
**dadurch gekennzeichnet, dass**
- das Produktband (**8**) und die Zufuhrkette (**2**) parallel zueinander angeordnet und in Gegenrichtung zueinander antreibbar sind und/oder
- die Picker (**20**) Roboter sind mit einem aus Oberarm (**20**b), Unterarm (**20**c) und Roboter-Hand (**20**d) bestehendem Roboter-Arm (**20**x) und insbesondere die Armebene (**24**) quer und vertikal zur Verlaufsrichtung (**10**a) des Produktbandes (**8**) angeordnet ist.
und/oder
- stromaufwärts des Umsetzbereiches (**22**) am Produktband (**8**) ein Produkt-Scanner (**49**) vorhanden ist, der mindestens die Anzahl, vorzugsweise jedoch auch die Position und insbesondere auch die Drehlage, jedes einzelnen Produktes (**100**) auf dem Produktband (**8**) ermittelt und an die Steuerung (**50**) meldet.
(Zufuhrkette)

4. Schlauchbeutel-Maschine nach einem der vorhergehenden Ansprüche,
**dadurch gekennzeichnet, dass**
- die Mitnehmer (**3**) derart lösbar an der Zufuhrkette (**2**) befestigt sind, dass zum Lösen wenigstens eines Teils jedes Mitnehmers (**3**) von der Zufuhrkette (**2**) weder die Zufuhrkette (**2**) aus der Schlauchbeutel-Maschine entnommen noch andere Bauteile von der Schlauchbeutel-Maschine demontiert werden müssen,
und/oder
- die Zufuhrkette (**2**) endlos in einer vertikalen Umlaufebene (**2'**) umläuft, die parallel zu den Längsrichtungen (**10**a, b) liegt, und
- insbesondere die Mitnehmer (**3**) von der Zufuhrkette (**2**) in der Umlaufebene (**2**') nach außen vorstehen.
(Mehrteilige Mitnehmer, Teile voneinander lösbar)

5. Schlauchbeutel-Maschine nach einem der vorhergehenden Ansprüche,
**dadurch gekennzeichnet, dass**
- die Mitnehmer (**3**) aus einem Basisteil (**3**a) bestehen, welches fest an der Zufuhrkette (**2**) montiert ist und auch bei einem Formatwechsel daran befestigt bleibt und aus einem Mitnehmer-Teil (**3**b), welches am Basisteil (**3**a) befestigbar, insbesondere verrastbar, ist und beim Formatwechsel gewechselt werden kann,
- und vorzugsweise das Mitnehmer-Teil (**3**b) in das Basisteil (**3**a) einsteckbar ist, insbesondere in dessen von der Zufuhrkette (**2**) wegweisende freie Stirnfläche, mittels an einem der beiden Teile angeordneten Einsteckzapfen (**6**) und einer entsprechenden Ausnehmung im anderen Teil, zwischen denen eine Rastvorrichtung (**36**) vorhanden ist, insbesondere eine mittels Federkraft vorgespannte Rastkugel.
(Mitnehmer einteilig oder mehrteilig, dann aber Teile gelenkig fest miteinander verbunden)

6. Schlauchbeutel-Maschine nach einem der vorhergehenden Ansprüche,
**dadurch gekennzeichnet, dass**
- die Mitnehmer (**3**) an in Längsrichtung (**10** b) beabstandeten Aufnahmen der Zufuhrkette (**2**), die insbesondere separate Teile sind, die dauerhaft an der Zufuhrkette befestigt sind, direkt leicht lösbar befestigt, insbesondere angesteckt und/oder verrastet sind und
- insbesondere die Mitnehmer (**3**) ein Mitnehmer-Teil (**3**b) umfassen, welches drehbar, aber nicht lösbar, um eine quer verlaufende Schwenkachse mit einem Basisteil (**3**a) verbunden ist und das Basisteil (**3**a) direkt lösbar an der Zufuhrkette (**2**) leicht lösbar befestigt ist.

7. Schlauchbeutel-Maschine nach einem der vorhergehenden Ansprüche,
**dadurch gekennzeichnet, dass**
- die Zufuhrkette (**2**) aus einzelnen, gelenkig miteinander verbundenen, Kettengliedern besteht und die Mitnehmer (**3**) an den einzelnen Kettengliedern (**37**) befestigbar, insbesondere ansteckbar und/oder verrastbar sind,
und/oder
- der Mitnehmer (**3**) oder dessen Basis-Teil (**3**a) auf der der Zufuhrkette (**2**) zugewandten Seite einerseits Anlageflächen zum Anliegen an der Zufuhrkette (**2**) und andererseits Rastnasen, insbesondere in Querrichtung (**11**) einrastende Quer-Rastnasen (**3.3**) aufweist zum Verrasten an entsprechenden Gegenelementen der Zufuhrkette (**2**), insbesondere einer Gliederkette.

8. Schlauchbeutel-Maschine nach einem der vorhergehenden Ansprüche,
**dadurch gekennzeichnet, dass**
- die Rastnasen, insbesondere Quer-Rastnasen (**3.3**), sich am freien Ende von gegen die Zufuhrkette (**2**) ragenden Rastarmen (**3.11**) befinden, und/oder
- die Kettenwangen (**38**) einer Gliederkette vorzugsweise von der Außenseite her offene Rastöffnungen aufweisen, in die die Rastnasen, insbesondere Quer-Rastnasen (**3.3**) hinein passen und in diesem Rastzustand die Auflageflächen des Mitnehmers (**3**) oder dessen Basisteiles (**3a**) an der Zufuhrkette (**2**), insbesondere den Kettenstegen (**39**) einer Gliederkette, aufliegen.

9. Schlauchbeutel-Maschine nach einem der vorhergehenden Ansprüche,
**dadurch gekennzeichnet, dass**
- der Mitnehmer (**3**) L-förmig ausgebildet ist mit einem bezüglich der Umlaufebene (**2**') nach außen weisenden Einsteckschenkel (**3**a**2**) und einem dazu, vorzugsweise an dessen unteren Ende, im Winkel und **vorzugsweise** etwa entgegen der Laufrichtung (**10** b) der Zufuhrkette (**2**) erstreckenden Führungsschenkel (**3**a**1**).
und/oder
- gelenkig um eine quer zur Laufrichtung (**1**b) der Zufuhrkette (**2**) liegende Schwenkachse (**7**)
- entweder der ganze Mitnehmer (**3**)
- oder bei einem mehrteiligen Mitnehmer (**3**)
- entweder dessen Basisteil (**3**a) an der Zufuhrkette (**2**)
- oder dessen Mitnehmer-Teil (**3**b) an dem Basisteil (**3**a) befestigt ist.

10. Schlauchbeutel-Maschine nach einem der vorhergehenden Ansprüche,
**dadurch gekennzeichnet, dass**
- eine insbesondere feststehende Kulissenführung (**40**) für die Mitnehmer (**3**) vorhanden ist, sodass beim Abtauchen des entlang des Obertrums (**2.1**) der Zufuhrkette (**2**) herangeführten Mitnehmers (**3**) im Wirkbereich der stromabwärtigen Umlenkrolle (**2**a) die nach vorne gerichtete Kontaktfläche (**43**) des Mitnehmers (**3**) wenigstens über einen anfänglichen Teil des Umlaufes um diese Umlenkrolle (**2**a) seinen lotrecht zur Umlaufebene (**2'**) betrachteten, bisherigen Aufrechtwinkel (**28**) gegenüber der Horizontalen im wesentlichen beibehält
- und vorzugsweise die Kulissenführung (**40**) so ausgebildet und positioniert ist, dass die Kontaktfläche (**43**) ihren Aufrechtwinkel (**28**) im Wesentlichen beibehält, bis die Oberkante des Mitnehmers (**3**) unter die Oberseite der Auflagefläche (**15**) abgesunken ist.

11. Schlauchbeutel-Maschine nach einem der vorhergehenden Ansprüche,
**dadurch gekennzeichnet, dass**
die Kulissenführung (**40**) eine Führungskurve (**41**) aufweist, die sich in Anlage an der Unterseite des Führungsschenkels (**3**a**1**)in Laufrichtung (**10**b) sowie quer zur Umlaufebene (**2'**) erstreckt und an ihrem in Laufrichtung der Zufuhrkette (**2**) weisenden Ende eine konvexe, insbesondere bogenförmige, Biegung in den Innenraum der endlos umlaufenden Zufuhrkette (**2** zwei) hinein vollzieht, so dass insbesondere beim Herumlaufen der Schwenkachse (**7**) um die stumm abfertige Führungsrolle Umlenkrollen (**2**a) der Führungsschenkel mit seinem nach hinten weisenden freien Ende an der konvexen Biegung der Führungsgruppe (**41**) anliegt.
**(Werkzeugwechsler)**

12. Schlauchbeutel-Maschine nach einem der vorhergehenden Ansprüche,
**dadurch gekennzeichnet, dass**
- ein Mitnehmer-Wechsler sowie ein Mitnehmer-Magazin, je eines oder beide insbesondere unter der Auflagefläche (**15**), so angeordnet sind, dass der Mitnehmer-Wechsler in der Lage ist, Mitnehmer ganz oder teilweise aus dem Untertrum (**2.2**) der Zufuhrkette (**2**), insbesondere quer zu dessen Umlaufebene, zu entnehmen und in dem Mitnehmer-Magazin abzulegen und umgekehrt,
- wobei es sich bei dem Mitnehmer-Magazin insbesondere um eine endlose, gesteuert angetriebene Magazin-Kette handelt.

13. Schlauchbeutel-Maschine nach einem der vorhergehenden Ansprüche,
**dadurch gekennzeichnet, dass**
für die Picker (**20**)
- zumindest Produkt-Werkzeuge (**21**a) zum Ergreifen von Produkten (**100**)
- insbesondere auch Mitnehmer-Werkzeuge (**21**b) zum Ergreifen von Mitnehmern (**3**)
gleichzeitig in der Schlauchbeutel-Maschine oder am Picker (**20**) vorhanden sind,
und, wenn sowohl Produkt-Werkzeuge (**21**a) als auch Mitnehmer-Werkzeuge (**21**b) vorhanden sind
- entweder beide an einem Picker (**20**) gleichzeitig vorhanden sind
- oder die Schlauchbeutel-Maschine einen Werkzeug-Wechsler sowie ein Werkzeug-Magazin (**14**) für die Mitnehmer-Werkzeuge (**21**b) umfasst.
(Mitlaufende Auflagefläche)

14. Schlauchbeutel-Maschine nach einem der vorhergehenden Ansprüche,
**dadurch gekennzeichnet, dass**
- die Auflagefläche für die Produkte **(100)** beidseits der Mitnehmer **(3)** mit der Zufuhrkette **(2)** mitläuft, insbesondere synchron mitläuft, und die Auflage-Teile (**15**a, b) der Auflagefläche in Laufrichtung (**10**b) beidseits der Mitnehmer **(3)** aus einzelnen, in Laufrichtung (**10**b) aufeinander folgenden, Auflage-Abschnitten **(16)** bestehen, die insbesondere an einer endlos umlaufend Auflage-Kette **(17)** oder einem Auflageband **(17),** insbesondere einzeln, befestigt sind,
- und vorzugsweise die Umlaufebene **(17')** der Auflage-Kette **(17)** in Laufrichtung (**10**b) betrachtet in einem Winkel **(18)** und beidseits symmetrisch zur Umlaufebene **(2')** der Zufuhrkette **(2)** angeordnet ist.
(schaltschranklose Details)

15. Schlauchbeutel-Maschine nach einem der vorhergehenden Ansprüche, mit Steuerungen **(50)** und Stromaufbereitungen für die anzusteuernden Maschinenkomponenten **(8, 20),** insbesondere die Picker **(20)** und das Produktband **(8),**
**dadurch gekennzeichnet, dass**
- die einzelnen Steuerungen **(50)** direkt an oder in den zu steuernden Maschinenkomponenten **(8, 20)** angeordnet und untereinander über Daten- und/oder Stromleitungen miteinander verbunden sind,
- die einzelnen Steuerungen **(50)** nur eine passive Kühlvorrichtung, insbesondere einen Kühlkörper oder Kühlrippen oder Heatpipes aufweisen,
- die Steuerungen **(50)** über steckbare Kabel als Datenleitungen und/oder Stromleitungen miteinander verbunden sind, und
- die Schlauchbeutel-Maschine einen Restschaltschrank aufweist, der die zentrale Stromzuführung für die gesamte Maschine und die elektrischen Sicherungen enthält.

16. Schlauchbeutel-Maschine nach einem der vorherigen Ansprüche,
**dadurch gekennzeichnet, dass**
- die Picker **(20)** an den Längsbalken (**23** b) und/oder Querbalken (**23** c) des Gestell-Module **(23)** befestigt sind und die zugehörige Steuerung **(50)** auf der Oberseite dieser Picker **(20),** insbesondere deren Roboter-Basis, angeordnet und die passive Kühlvorrichtung nach oben offen ist, und/oder
- die Steuerungen für die Transportvorrichtungen, insbesondere das Produktband **(8)** und die Zufuhr-Kette **(2),** die insbesondere in Längsrichtung **(10)** verlaufend unter den Balken angeordnet sind, an der jeweiligen Transportvorrichtung, insbesondere an deren Unterseite, angeordnet sind mit einer frei zugänglichen Kühlvorrichtung, insbesondere einem Kühlkörper
und/oder
- der Restschaltschrank als eigenes Gestell-Modul gestaltet ist, und insbesondere aus einem Querbalken (**23** c) und zwei aufrechten Säulen (**23**a) besteht, und dabei insbesondere die Säulen (**23**a) mittels Klappen zu öffnen sind und als Restschaltschrank dienen.

17. Schlauchbeutel-Maschine nach einem der vorherigen Ansprüche,
**dadurch gekennzeichnet, dass**
- die Stromaufbereitungen separat für jedes Maschinen-Modul im Gestell-Modul, insbesondere dem oberen Längsbalken (**23** b) des Gestell-Moduls **(23),** angeordnet ist, und/oder
- als Elektromotore Servomotore verwendet werden, die beim Abbremsen der von Ihnen angetriebenen bewegten Komponente, z. B. des Roboterarmes (**20** x), Strom erzeugen.

18. Schlauchbeutel-Maschine nach einem der vorherigen Ansprüche,
**dadurch gekennzeichnet, dass**
- die Stromaufbereitungseinheiten Pufferkondensatoren umfassen, in denen von den Servomotoren erzeugter und momentan nicht benötigter oder nicht in diesem Maschinenmodul benötigter Strom kurzzeitig zwischengepuffert werden kann, und insbesondere
- die Pufferkondensatoren im Restschaltschrank angeordnet sind.

19. **Verfahren** zum Betreiben einer Schlauchbeutel-Maschine, insbesondere nach einem der vorhergehenden Ansprüche, welche Schlauchbeutel **(96)** mit mindestens je einem darin befindlichen Produkt **(100)** herstellt, mittels
- Anliefern, insbesondere ungeordnetem Anliefern, der abzupackenden Produkte **(100)** zur Schlauchbeutel-Maschine mittels eines Produkt-Förderers, insbesondere eines Produktbandes **(8),**
- Verformen einer laufenden, ebenen, quasi-endlosen Folienbahn **(99)** zu einem Folienschlauch **(99)** mittels Gegeneinanderbewegen und LängsSiegeln der siegelfähigen Längs-Ränder der Folienbahn **(99)** mittels einer Längs-Siegeleinheit (**1**a),
- Zuführen der Produkte **(100)** oder Produktgruppen **(100')** in den entstehenden laufenden Folienschlauch **(99)** hinein mittels einer Zufuhrkette **(2),** an der in Laufrichtung (**10**b) der Zufuhrkette **(2)** beabstandet durch Mitnehmer **(3)** Gefache **(4)** für die Produkte **(100)** angeordnet sind,
- Quer-Siegeln des Folienschlauches **(99)** zwischen den darin befindlichen Produkten **(100)** oder Produktgruppen **(100')** über jeweils die gesamte Breite des Folienschlauches **(99)** mittels einer Quer-Siegeleinheit (**1**b),
- Trennen der einzelnen Schlauchbeutel **(96)** voneinander an der jeweils wenigstens einen Quer-Siegelnaht **(98)** dazwischen,
**dadurch gekennzeichnet, dass**
- das Umsetzen der Produkte **(100)** von dem Produktförderer in die Gefache **(4)** der Zufuhrkette **(2)** mittels mehrerer in Laufrichtung (**10**b) der Zufuhrkette **(2)** beabstandet entlang der Zufuhrkette **(2)** angeordneter Picker **(20)** erfolgt,
- die Laufgeschwindigkeit der Zufuhrkette **(2)** in Abhängigkeit der pro Zeiteinheit zugeführten, insbesondere in den Umsetzbereich **(22)** zugeführten, und ermittelten Anzahl von Produkten **(100)** gesteuert wird,
- die Laufgeschwindigkeit der Folienbahn **(99)** in Abhängigkeit, insbesondere analog, der Laufgeschwindigkeit der Zufuhrkette **(2)** gesteuert wird,
- die Temperatur der Längs-Siegeleinheit (**1**a), insbesondere der Längs-Siegelrollen **(6),** in Abhängigkeit von der Laufgeschwindigkeit (**10**a) der Folienbahn **(99)** gesteuert wird.

20. Verfahren nach einem der vorhergehenden Verfahrensansprüche,
**dadurch gekennzeichnet, dass**
- die Änderungsgeschwindigkeit der Laufgeschwindigkeit der Zufuhrkette (2) begrenzt wird auf eine solche Änderungsgeschwindigkeit, dass die Änderungsgeschwindigkeit der Temperaturänderung der Längs-Siegeleinheit (**1**a) analog angepasst werden kann, abhängig von der momentanen Temperatur der Längs-Siegeleinheit (**1**a),
und/oder
- als zweite Steuerungsebene der in Laufrichtung (**1**a) der Zufuhrkette **(2)** letzte Roboter die Laufgeschwindigkeit der Zufuhrkette **(2)** so steuert, dass nur vollständig gefüllte Gefache **(4)** der Zufuhrkette **(2)** den Umsetzbereich **(22)** verlassen.

21. Verfahren nach einem der vorhergehenden Verfahrensansprüche,
**dadurch gekennzeichnet, dass**
die Kontaktflächen **(43)** der Mitnehmer **(3)** entlang der Förderstrecke **(27)** der Zufuhrkette **(2)** in einem definierten Aufrecht-Winkel **(18)** zur Horizontalen aufrecht stehend so gehalten sind, dass die Kontaktflächen **(43)** am Ende der Förderstrecke **(27)** zumindest über einen ersten Teil des Herumlaufens um die stromabwärtige Umlenkrolle (**2**a) der Zufuhrkette **(2)** ihren Aufrechtwinkel **(18)** beibehalten, bis der jeweilige Mitnehmer **(3)** unter die Höhe der Auflagefläche für die Produkte **(100)** abgetaucht ist.

22. Verfahren nach einem der vorhergehenden Verfahrensansprüche,
**dadurch gekennzeichnet, dass**
- im Falle des Umrüstens der Schlauchbeutel-Maschine auf ein neues Produkt (**100**) die lösbar an der Zufuhrkette (2) befestigte Mitnehmer **(3)** oder wenigstens ein Teil jedes Mitnehmers **(3)** von den Pickern **(20) *oder einem Mitnehmer-Wechsler*** automatisch entfernt werden, und
- entweder an den gleichen Stellen oder an anderen Stellen der Zufuhrkette **(2)** anders geformte Mitnehmer **(3)** oder Mitnehmerteile von den Pickern **(20)** automatisch an der Zufuhrkette **(2)** befestigt werden.
- und insbesondere für das Umrüsten an den Pickern **(20)** die Produkt-Werkzeuge (**21**a) automatisch gegen Mitnehmer-Werkzeuge (**21**b) gewechselt werden, wofür ein Magazin **(14)** für Werkzeuge (**21**a, b) und/oder eine Werkzeug-Wechsel-Vorrichtung in den Umsetzbereich **(22)** und die Greifbereiche **(20')** der einzelnen Picker **(20)** gebracht werden.

23. Verfahren nach einem der vorhergehenden Verfahrensansprüche,
**dadurch gekennzeichnet, dass**
die Auflage-Teile (**15**a, b) für die Produkte **(100)** beidseits der Mitnehmer **(3)** in Laufrichtung (**10**b) mit den Mitnehmern **(3),** insbesondere synchron, mitbewegt werden und/oder auch die beiden Auflage-Teile **(15a, b)** relativ zueinander synchron oder nicht-synchron bewegt werden, und insbesondere die Auflage-Teile (**15**a, b) am stromabwärtigen Ende der Förderstrecke **(27)** der Zufuhrkette **(2)** nach außen bewegt werden, insbesondere indem die Umlaufebenen **(17')** der Auflage-Ketten **(17)** im Winkel zur Umlaufebene **(2')** der Zufuhrkette **(2)** angeordnet werden.

## Claims

1. A tubular bag machine comprising:
- a tubular bag assembly unit (1) including a longitudinal sealing unit (1 a) and a transversal sealing unit (1 b) configured to produce tubular bags (96) with products (100) or product groups (100') received therein from a foil web (99) that runs in a longitudinal direction (10a),
- a product feed device, in particular a product band (8) for supplying the products (100) or product groups (100') to be packaged,
- a feed chain unit (44) including a contact surface (15) for the products (100) and a feed chain (2) extending in a longitudinal direction (10b), in particular an endless feed chain including carriers (3) arranged on the feed chain (2) with a longitudinal offset (9) for moving the products (100) forward along a feed path (27),
- at least one control (50) for controlling the entire tubular bag machine, **characterized in that**
- the carriers (3) are attached at the feed chain (2) in a disengageable manner and are at least partially disengageable from the feed chain (2) that is mounted in the tubular bag machine and which are attachable at different longitudinal positions at the feed chain (2),
- plural pickers (20) that are offset along the feed chain (2) in the longitudinal direction (10b) upstream from the tubular bag assembly unit (1) so that the feed chain (2) as well as the product band (8) is arranged in an operating portion (20') of the tubular bag assembly unit, and
- the control (50) is configured to control a running speed of the foil web (99) on the one hand side and on the other hand side a running speed of the feed chain (2) independently from each other or as a function of each other and to control the running speed of the feed chain (2) as a function of a number of products (100) arriving in a transposing portion (22) of pickers (20) per unit time.

2. The tubular bag machine according to claim 1,
**characterized in that**
the contact surface (15)
- either includes two aligned contact surface portions (15a, b) which terminate in the longitudinal direction (10b) in front of an end of the conveying path (27) of the feed chain (2) and a slot (25) extending between the two aligned contact surface portions in the longitudinal direction (10b) through which slot the carriers (3) extend, or
- the contact surface (15) is respectively configured as a portion of the carriers (3).

3. The tubular bag machine according to one of the preceding claims,
**characterized in that**
- the product band (8) and the feed chain (2) are arranged parallel to each other and drivable opposite to each other, and/or
- the pickers (20) are robots with a robot arm (20x) including an upper arm (20b), a lower arm (20c) and a robot hand (20d) and in particular the an arm plane (24) is arranged transversal and vertical to an extension (10a) of the product band (8), and/or
- a product scanner (49) is provided at the product band (8) upstream of the transposing portion (22) wherein the product scanner reports at least a number, advantageously also a position and in particular also a rotation position of each individual product (100) on the product band (8) and reports them to the control (50).
(feed chain)

4. The tubular bag machine according to one of the preceding claims,
**characterized in that**
- the carriers (3) are removably attached at the feed chain so that for disengaging at least a portion of each carrier from the feed chain neither the feed chain (2) has to be removed from the tubular bag machine nor other components have to be removed from the tubular bag machine, and/or
- the feed chain (2) runs without end in a vertical revolution plane (2') which is arranged parallel to the longitudinal direction (10a, b), and
- in particular the carriers (3) protrude from the feed chain (2) in the revolution plane (2') in outward direction,
(multi-component carrier, components disengageable from each other).

5. The tubular bag machine according to one of the preceding claims,
**characterized in that**
- the carriers include a base element (3a) which is firmly fixated at the feed chain (2) and remains fixated at the feed chain during a format change, and a carrier component (3b) which is attachable at the base element (3a), in particular interlockable and which is replaceable during a format change
- wherein the carrier component (3b) is advantageously insertable into the base element (3a), in particular into a free face of the base element (3a) that is oriented away from the feed chain (2) by an insertion pin (6) arranged at one of the two components and a respective recess in the other component wherein an interlocking device (36) is provided between the two components, in particular an interlocking ball that is preloaded by a spring force
(Carrier provided in one component or in multiple components wherein the components are pivotably linked at each other.

6. The tubular bag machine according to one of the preceding claims,
**characterized in that**
- the carriers (3) are directly attached so that they are easily disengage able, in particular plugged in and/or interlocked at receivers of the feed chain (2) that are offset in the longitudinal direction (10b) which are in particular separate components which are permanently attached at the feed chain, and
- in particular the carriers (3) include a carrier element (3b) which is attached at a base element (3a) so that it is rotatable about a transversally extending pivot axis but not disengageable and the base element (3a) is directly attached at the feed chain (2) so that it is easily disengageable.

7. The tubular bag machine according to one of the preceding claims,
**characterized in that**
- the feed chain (2) is made from individual chain links that are linked together and the carriers (3) are attachable at the individual chain links (37), in particular insertable and/or interlockable, and/or
- the carrier (3) or its base element (3a) include on the one hand side contact surfaces for contacting the feed chain (2) and on the other hand side interlocking lugs, in particular transversal interlocking lugs (3.3) interlocking in the transversal direction (11) for interlocking at corresponding opposite elements of the feed chain (2) in particular a link chain.

8. The tubular bag machine according to one of the preceding claims,
**characterized in that**
- the interlocking lugs, in particular the transversal interlocking lugs (3.3) are arranged at a free end of interlocking arms (3.11) protruding towards the supply chain (2) and/or
- chain lobes (38) of the link chain include interlocking openings that are advantageously open from the outside and inti which the interlocking lugs fit, in particular the transversal interlocking lugs (3.3) and contact surfaces of the carrier (3) or of its base element (3a) contact in this engagement condition at the feed chain (2a) in particular the chain bars (39) of the link chain.

9. The tubular bag machine according to one of the preceding claims,
**characterized in that**
- the carrier (3) is configured L-shaped with an insert arm (3a2) that is oriented outward with respect to the revolution plane (2') and with a support arm (3a1) extending relative to the insert arm (3a2), advantageously its lower end, at an angle and advantageously against the running direction (10b) of the feed chain (2) and/or
- pivotable about a pivot axis (7) arranged transversal to the running direction (1b) of the feed chain (2),
- either the entire carrier (3),
- or for a multi-component carrier (3),
- either its base element (3a) is attached at the feed chain (2),
- or its carrier component (3b) is attached at the base element (3a).

10. The tubular bag machine according to one of the preceding claims,
**characterized in that**
- in particular a fixated coulisse support (40) is provided for the carriers (3) so that when a carrier (3) that is moved up along an upper main element (2.1) of the feed chain (2) dives downward a forward oriented contact surface (43) of the carrier (3) in an operating range of the downstream pulley roller (2a) maintains a previous extension angle (28) relative to horizontal perpendicular to the revolution plane (2') at least along an initial portion of a revolution about the pulley roller (2a),
- and advantageously the coulisse support (40) is configured and positioned so that the contact surface (43) essentially maintains its extension angle (28) until an upper edge of the carrier (3) has dropped below a top side of the contact surface (15).

11. A tubular bag machine according to one of the preceding claims,
**characterized in that** the coulisse support (40) includes a support curve (41) which contacts a bottom side of the support arm (3a1) in the running direction (10b) and which extends transversal to the revolution plane (2') and which performs a convex, in particular arcuate bend into an interior space of the endless revolving feed chain (2) at an end of the support curve that is oriented in a running direction of the feed chain so that in particular when the pivot axis (7) extends about the pulley rollers (2a) the support arm with its rear oriented free end contacts the convex bend of the support group (41).
(tool changer)

12. The tubular bag machine according to one of the preceding claims,
**characterized in that**
- a carrier changer and/or a carrier magazine is arranged in particular under the contact surface (15) so that the carrier changer is configured to remove carriers entirely or partially from a lower main element (2.2) of the feed chain (2), in particular transversally to its revolution plane and deposit them in the carrier magazine and vice versa,
- wherein the carrier magazine is in particular an endless magazine chain that is driven by a controlled drive.

13. The tubular bag machine according to one of the preceding claims,
**characterized in that**
for the pickers (20)
- at least product tools (21 a) for gripping products (100),
- in particular also carrier tools (21 b) for gripping carriers (3)
are simultaneously provided in the tubular bag machine or at the picker (20), and
when product tools (21 a) as well as carrier tools (21 b) are provided
- either both are simultaneously provided at a picker (20),
- or the tubular bag machine includes a tool changer and a tool magazine (14) for the carrier tools (21 b).
(jointly moving contact surface)

14. The tubular bag machine according to one of the preceding claims,
**characterized in that**
- a contact surface for the products (100) moves jointly with the feed chain (2) on both sides of the carriers (3) in particular moves joints synchronously and the contact components (15a, b) of the contact surface in the running direction (10b) on both side of the carriers (3) are made from individual contact sections (16) following upon each other in the running direction (10b), wherein the contact sections are attached in particular individually attached at an endless revolving contact chain (17) or at a contact band (17),
- and advantageously the revolution plane (17') of the contact chain (17) is arranged in running direction (10b) at an angle (18) and symmetrically on both sides to the revolution plane (2') of the feed chain (2).
(details of embodiment without electrical cabinet)

15. The tubular bag machine according to one of the preceding claims, including controls (50) and electrical power processors for machine components (8, 20) to be controlled, in particular the pickers (20) and the product band (8),
**characterized in that**
- the individual controls (50) are arranged directly at or in the machine components (8, 20) to be controlled and are connected with each other by data and/or electrical power conductors,
- the individual controls (50) only include a passive cooling device, in particular a cooling element or cooling ribs or heat pipes,
- the controls (50) are connected with each other by pluggable cables forming data conductors and/or electrical power conductors and
- the tubular bag machine includes a residual electrical cabinet which includes a central power supply for the entire machine and the electrical fuses.

16. The tubular bag machine according to one of the preceding claims,
**characterized in that**
- the pickers (20) are attached at longitudinal bars (23b) and/or transversal bars (23c) of the frame module (23) and an associated control (50) is arranged at a top side of the pickers (20), in particular their robot base and the passive cooling device is open in an upward direction and/or
- the controls for the transport devices, in particular the product band (8) and the feed chain (2) which are arranged extending in the longitudinal direction (10) under the bar are arranged at the respective transport device, in particular its bottom side and provided with a freely accessible cooling device in particular a cooling element and/or
- the residual electrical cabinet is configured as an individual frame module and in particular made from a transversal bar (23c) and two vertical columns (23a) and wherein the columns (23a) are in particular openable by flaps and used as a residual electrical cabinet.

17. The tubular bag machine according to one of the preceding claims,
**characterized in that**
- the electrical power processors are arranged separately for each machine module in the frame module, in particular the upper longitudinal bar (23b) of the frame module (23) and/or
- servo motors are used as electric motors wherein the servo motors generate electrical power when breaking components e.g. of the robot arm (20x) that are driven by the servo motors.

18. The tubular bag machine according to one of the preceding claims,
**characterized in that**
- the electrical power processors include buffer capacitors in which electrical power that is generated by the servo motors and that is presently not needed or not needed in a particular machine module can be buffered in an intermediary manner for a short time, and in particular
- the buffer capacitors are arranged in the residual electrical cabinet.

19. A method for operating a tubular bag machine, in particular according to one of the preceding claims, which produces tubular bags (96) including at least one product (100), the method including the steps:
- delivering, in particular unarranged delivering of products (100) to be packaged to the tubular bag machine by a product feeder, in particular a product band (8),
- deforming a running flat, quasi endless foil web (99) into a foil hose (99) by moving sealable longitudinal edges of the foil web together and longitudinally sealing them by a longitudinal sealing unit (1 a),
- feeding the products (100) or product groups (100') into the generated running foil hose (99) by a feed chain (2) wherein compartments (4) for the products (100) are arranged in the running direction (10b) of the feed chain (2) wherein the compartments are offset from each other by the carriers (3)
- transversal sealing of the foil hose (99) between the products (100) or product groups (100') arranged therein respectively over an entire width of the foil hose (99) by a transversal sealing unit (1 b),
- separating the individual tubular bags (96) from each other at one of plural transversal sealing seams (98),
**characterized in that**
- transposing the products (100) from the product feeder into the compartments (4) of the feed chain (2) is performed by plural pickers (20) arranged in the running direction (10b) of the feed chain (2) and offset along the feed chain (2),
- a running speed of the feed chain (2) is controlled as a function of a number of products (100) fed and counted per unit time in particular to the transposing portion (22)
- the running speed of the foil web (99) is controlled as a function in particular analogous to a running speed of the feed chain (2)
- a temperature of the longitudinal sealing unit (1 a) in particular of the sealing rollers (6) is controlled as a function of a running speed (10a) of the foil web (99).

20. The method according to one of the preceding method claims,
**characterized in that**
- a rate of change of the running speed of the feed chain (2) is limited to a rate of change so that a rate of change of a temperature of the longitudinal sealing unit (1 a) is analogously adaptable as a function of a current temperature of the longitudinal sealing unit (1a),
and/or
- as a second control level a last robot in a running direction (1 a) of the feed chain (2) controls a running direction of the feed chain (2) so that only completely filled compartments (4) of the feed chain (2) leave the transposing portion (22).

21. The method according to one of the preceding method claims,
**characterized in that**
the contact surfaces (43) of the carriers (3) are kept vertically standing along a feed path (27) of the feed chain (2) at a defined vertical angle (18) relative to horizontal so that the contact surfaces (43) at an end of the feed path (27) maintain their vertical alignment (18) at least over a first portion of a run about a downstream pulley roller (2a) of the feed chain (2) until a respective carrier has moved below a level of a contact surface for the products (100).

22. The method according to one of the preceding method claims,
**characterized in that**
- carriers or at least portions of each carrier that are attached at the feed chain in a disengageable manner are automatically removed by the pickers or by a picker changer when the tubular bag machine is reconfigured for a new product (100), and
- either at identical locations or at other locations of the feed chain (2) differently shaped carriers (3) or carrier components are automatically attached at the feed chain (2) by the pickers (20),
- and in particular for retooling at the pickers the product tools (21 a) are automatically exchanged with carrier tools (21 b) at the pickers (20), wherein a magazine (14) for tools (21 a, b) and/or a tool changing device is brought into the transposing portion (22) and the gripping portions (20') of the individual pickers (20).

23. The method according to one of the preceding method claims, **characterized in that** the contact components (15a, b) for the products (100) are moved on both sides of the carriers (3) in the running direction (10b) together with the carriers (3) in particular moved synchronously with the carriers and/or also the two contact components (15a, b) are moved relative to each other synchronously or non-synchronously and in particular the contact components (15a, b) at a downstream end of the feed path (27) of the feed chain (2) are moved in an outward direction, in particular **in that** the revolution planes (17') of the contact chain (17) are arranged at an angle to a running plane (2') of the feed chain (2).

## Revendications

1. Ensacheuse verticale pour sachets tubulaires, comprenant
- un groupe d'ensachage vertical (1) avec une unité de scellement longitudinale (1a) et une unité de scellement transversale (1b), les sachets tubulaires (96) contenant les produits (100) ou groupes de produits (100') et étant confectionnés à partir d'une bobine de film (99) défilant dans la direction longitudinale (10a),
- un dispositif d'alimentation de produits (44), en particulier une bande transporteuse de produits (8) pour amener des produits à emballer (100) ou groupes de produits (100'),
- une unité de chaînes d'alimentation (44) avec une surface d'appui (15) pour les produits (100), en particulier ainsi qu'une chaîne d'alimentation sans fin (2) défilant dans une direction longitudinale (10b), présentant des moyens d'entraînement (3) espacés par des intervalles longitudinaux (9) pour faire avancer lesdits produits (100) sur un trajet de transport (27),
- au moins un dispositif électrique (50) pour commander l'ensemble de l'ensacheuse verticale,
**caractérisé en ce que**
- les moyens d'entraînement (3) sont fixés de façon amovible à la chaîne d'alimentation (2) et peuvent être retirés de la chaîne d'alimentation (2) montée dans l'ensacheuse verticale sur la chaîne d'alimentation (2),
- une pluralité de dispositifs de préhension (20) espacés dans la direction longitudinale (10b) le long de la chaîne d'alimentation (2) sont disposés en amont du groupe d'ensachage vertical (1) de telle sorte que
la chaîne d'alimentation (2) ainsi que la bande de produit (8) se trouvent respectivement dans leur espace de travail (20'), et - la commande (50) est apte à commander d'une part, la vitesse de défilement de la bobine de film (99) et d'autre part, la vitesse de défilement de la chaîne d'alimentation (2) indépendamment l'une de l'autre et la vitesse de défilement de la chaîne d'alimentation (2) en fonction du nombre de produits (100) arrivant par unité de temps dans la zone de transfert (22) des dispositifs de préhension.

2. Ensacheuse verticale pour sachets tubulaires selon la revendication 1,
**caractérisée en ce que**
la surface d'appui (15)
- se compose soit de deux parties d'appui mutuellement alignées (15a, b) qui s'étendent dans la direction longitudinale (10b) jusqu'à l'extrémité du trajet de convoyage (27) de la chaîne d'alimentation (2) et présentent entre elles dans la direction longitudinale (10b) une fente (25) traversée par les moyen d'entraînements (3)
- soit la surface d'appui (15) fait partie des entraîneurs (3).

3. Ensacheuse verticale pour sachets tubulaires selon l'une des revendications précédentes,
**caractérisée en ce que**
- la bande de produit (8) et la chaîne d'alimentation (2) sont disposées parallèlement entre eux et entraînées dans la direction opposée l'une de l'autre l'autre et/ou
- les robots de préhension (20) se composent d'un bras supérieur (20b), d'un bras inférieur (20c) et d'une main (20d) de bras de robot existant (20x) et en particulier le plan de bras (24) est disposé transversalement et perpendiculairement au sens de défilement (10a) de la bande de produit (8).
et/ou
- en amont de la zone de transfert (22), il est prévu sur la bande de produits (8), un scanner de produits (49), qui détecte au moins le nombre, mais de préférence également la position et en particulier également la position de rotation de chaque produit individuel (100) sur la bande de produits (8) détermine et le signale à la commande (50).
(chaîne d'alimentation)

4. Ensacheuse verticale pour sachets tubulaires selon l'une des revendications précédentes,
**caractérisée en ce que**
- les entraîneurs (3) sont fixés de manière amovible sur chaîne d'alimentation (2), et que pour enlever au moins une partie de chaque moyen d'entraînement (3) de la chaîne d'alimentation (3), il n'est pas nécessaire de démonter ni la chaîne d'alimentation (2) ni d'autres composants de l'ensacheuse verticale et/ou
- la chaîne d'alimentation (2) défile sans fin dans un plan vertical de rotation (2') qui est parallèle aux directions longitudinales (10a, b), et
- en particulier, les entraîneurs (3) dans le plan orbital (2') font saillie vers l'extérieur de la chaîne d'alimentation (2).
(moyens d'entraînement en plusieurs pièces amovibles les unes des autres)

5. Ensacheuse verticale pour sachets tubulaires selon l'une des revendications précédentes,
**caractérisée en ce que**
- les entraîneurs (3) se composent d'une partie de base (3a) qui est montée de manière fixe sur la chaîne d'alimentation (2) et qui reste fixée même lors d'un changement de format et d'une partie d'entraînement (3b) qui peut être fixée sur la partie de base (3a) en particulier encliquetée,
et peut être remplacée lors d'un changement de format,
- et de préférence, la partie d'entraînement (3b) peut être introduite dans la partie de base (3a), en particulier dans la surface frontale libre détournée de la chaîne d'alimentation (2), au moyen d'un ergot d'insertion (6) disposé sur l'une des deux parties et d'un évidement correspondant dans l'autre partie, entre lesquels est prévu un dispositif d'enclenchement (36), en particulier une bille d'enclenchement précontrainte sous la force de ressort.
(Entraîneurs d'une seule pièce et à plusieurs pièces étant reliées fixement par des articulations).

6. Ensacheuse verticale pour sachets tubulaires selon l'une des revendications précédentes,
**caractérisée en ce que**
- les entraîneurs (3), montés durablement à la chaîne d'alimentation sont fixés de manière facilement amovible en particulier insérés et/ou encliquetés à des logements espacés dans la direction longitudinale (10b) de la chaîne d'alimentation (2),
- en particulier, les entraîneurs (3) comprennent une partie d'entraînement (3b) qui est reliée de manière rotative autour d'un axe de pivotement transversal à une partie de base (3a) et la partie de base (3a) est directement fixée de façon amovible à la chaîne d'alimentation (2).

7. Ensacheuse verticale pour sachets tubulaires selon l'une des revendications précédentes,
**caractérisée en ce que**
- la chaîne d'alimentation (2) se compose de maillons individuels reliés entre eux de manière pivotante, et les entraîneurs (3) peuvent être fixés sur les différents maillons (37), en particulier insérés et/ou enclenchés,
et/ou
- l'entraîneur (3) ou sa partie de base (3a) présente sur la face tournée vers la chaîne d'alimentation (2) d'une part des surfaces d'appui pour s'appliquer contre la chaîne d'alimentation (2) et d'autre part, des ergots d'encliquetage, en particulier des ergots d'encliquetage transversaux (3.3) s'enclenchant, en particulier dans la direction transversale (11) pour l'encliquetage dans des contre-éléments correspondants de la chaîne d'alimentation (2), en particulier une chaîne à maillons.

8. Ensacheuse verticale pour sachets tubulaires selon l'une des revendications précédentes,
**caractérisée en ce que**
- les ergots d'encliquetage, en particulier des ergots d'encliquetage transversaux (3.3), se trouvent à l'extrémité libre de bras d'encliquetage (3.11) s'appliquant contre la chaîne d'alimentation (2),
et/ou
- les joues de chaîne (38) d'une chaîne à maillons présentent des ouvertures d'encliquetage de préférence ouvertes depuis la face externe dans lesquelles s'engagent les ergots d'encliquetage, en particulier les ergots transversaux d'encliquetage (3.3) et dans cet état d'encliquetage, les surfaces d'application de l'entraîneur (3) ou de sa partie de base (3a) s'appliquent contre la chaîne d'alimentation (2), en particulier les étais (39) d'une chaîne à maillons.

9. Ensacheuse verticale pour sachets tubulaires selon l'une des revendications précédentes,
**caractérisée en ce que**
- l'entraîneur (3) forme un L avec un côté d'insertion (3a2) tourné vers l'extérieur par rapport au plan de rotation (2') faisant face à la jambe vers l'extérieur un côté de guidage (3a1) formant un angle avec ce dernier, de préférence à son extrémité inférieure, et de préférence à l'encontre du sens de défilement (10b) de la chaîne d'alimentation (2) et/ou
- soit l'ensemble de l'entraîneur (3) est fixé en articulation autour d'un axe de pivotement (7) transversal au sens de défilement (1) de la chaîne d'alimentation (2)
- soit pour un entraîneur à plusieurs parties (3)
- soit sa partie de base (3a) est fixée sur la chaîne d'alimentation (2)
- soi sa partie d'entraînement (3b) est fixée sur la partie de base (3a).

10. Ensacheuse verticale pour sachets tubulaires selon l'une des revendications précédentes,
**caractérisée en ce qu'**
- une coulisse de guidage particulièrement fixe (40) est prévue pour l'entraîneur (3), de sorte que lors de la descente de l'entraîneur (3) guidé le long du brin supérieur (2.1) de de la chaîne d'alimentation (2) dans la zone d'action de la poulie de renvoi aval (2a), la surface de contact dirigée vers l'avant (43) de l'entraîneur (3) conserve sensiblement au moins sur une partie initiale de la rotation autour de cette poulie de renvoi (2a) son angle droit initial considéré perpendiculairement au plan de rotation (2'), avant de maintenir l'angle (28) par rapport à l'horizontale
- et de préférence, la coulisse de guidage (40) est conçue et positionnée de sorte que la surface de contact (43) conserve sensiblement son angle droit (28) jusqu'à ce que le bord supérieur de l'entraîneur (3) soit descendu en dessous de la face supérieure de la surface d'appui (15).

11. Ensacheuse verticale pour sachets tubulaires selon l'une des revendications précédentes, **caractérisée en ce que** la coulisse de guidage (40) présente une came de guidage (41) se prolongeant en contact sur la face inférieure du bras de guidage (3a1) dans la direction de roulement (10b) ainsi que transversalement par rapport au plan de rotation (2) et qui réalise à son extrémité tournée dans le sens de défilement de la chaîne d'alimentation (2) une courbe convexe particulièrement arquée à l'intérieur de la chaîne d'alimentation (2) circulant sans fin de sorte qu'en particulier, pendant la rotation autour de l'axe de pivotement (7) autour de la poulie de guidage (2a) des poulies de renvoi (2a) le côté de guidage s'applique avec son extrémité libre dirigée vers l'intérieur contre la courbe convexe du groupe de guidage (41).
(Changeur d'outils)

12. Ensacheuse verticale pour sachets tubulaires selon l'une des revendications précédentes,
**caractérisée en ce qu'**
- un changeur d'entraîneurs ainsi qu'un magasin d'entraîneur sont disposés soit un soit les deux sous la surface d'appui (15) de telle sorte que le changeur d'entraîneur est en mesure de retirer des entraîneurs entièrement ou partiellement du brin inférieur (2.2) de la chaîne d'alimentation (2), en particulier transversalement à son plan orbital, et les stocker dans le magasin d'entraîneur et vice versa,
- le magasin d'entraîneur étant en particulier un magasin à chaîne sans fin entraîne par commande.

13. Ensacheuse verticale pour sachets tubulaires selon l'une des revendications précédentes,
**caractérisée en ce que**
pour les dispositifs de préhension (20), il est prévu
- au moins des outils de produits (21 a) pour saisir des produits (100)
- également en particulier des outils d'entraîneur (21 b) pour saisir des entraîneurs (3) présents simultanément dans l'ensacheuse verticale ou sur le dispositif de préhension (20),
et si les deux outils de produits (21 a) et des outils d'entraîneur (21 b) sont présents
- soit les deux se trouvent simultanément sur un outil de préhension (20)
- soit l'ensacheuse verticale comprend un changeur d'outils et un magasin d'outils (14) pour les outils d'entraîneurs (21 b).
(Surface d'appui entraînée)

14. Ensacheuse verticale pour sachets tubulaires selon l'une des revendications précédentes,
**caractérisée en ce que**
- la surface d'appui pour les produits (100) se déplace de part et d'autres des entraîneurs (3) avec la chaîne d'alimentation (2) en particulier de manière synchrone, et les parties d'appui (15a, b) de la surface d'appui dans le sens de défilement (10b) de part et d'autre des entraîneurs (3) se compose en particulier de sections individuelles successives d'appui (10b) en particulier, dans le sens de défilement qui sont fixées en particulier individuellement sur une chaîne d'appui sans fin (17) ou une bande d'appui (17),
- et de préférence, le plan de rotation (17') de la chaîne d'appui (17) est disposé dans le sens de défilement (10b), vue sous un angle (18) et des deux côtés symétriquement par rapport au plan de rotation (2') de la chaîne d'alimentation (2) est disposé
(Détails sans armoire électrique).

15. Ensacheuse verticale pour sachets tubulaires selon l'une des revendications précédentes, ayant des commandes (50) et des préparations de courant pour les composants de machines à contrôler (8, 20), en particulier les dispositifs de préhension (20) et la bande de produits (8)
**caractérisée en ce que**
- les commandes individuelles (50) sont disposées directement sur ou dans les composants de machines (8, 20) et sont reliées entre elles par l'intermédiaire de lignes de données et/ou d'alimentation
- les commandes individuelles (50) ne présentent qu'un dispositif de refroidissement passif, en particulier un corps ou ailettes de refroidissement ou caloducs,
- les commandes (50) sont reliées entre elles par câbles en tant que lignes de données et/ou lignes de courant, et
- l'ensacheuse tubulaire présente une armoire électrique qui contient l'alimentation centrale pour l'ensemble de la machine et les fusibles électriques.

16. Ensacheuse verticale pour sachets tubulaires selon l'une des revendications précédentes, le
**caractérisée en ce que**
- les entraîneurs (20) sont fixés sur des poutres longitudinales (23 b) et/ou transversales (23 c) des modules de bâti (23) sont fixes et la commande associée (50) est disposée sur la face supérieure de ces entraîneurs (20), en particulier sur la base de robot et le dispositif de refroidissement passif est ouvert vers le haut,
et/ou
- les commandes pour les dispositifs de transport, notamment la bande de produits (8) et la chaîne d'alimentation (2), qui sont disposées en particulier dans la direction longitudinale (10) se prolongeant sous les poutres, sur le dispositif de transport respectif, et en particulier sur sa face inférieure avec un refroidisseur librement accessible, en particulier un dissipateur de chaleur et/ou
- l'armoire électrique est conçue comme un module de châssis séparé, et en particulier d'une traverse (23 c) et deux colonnes verticales (23a), et en particulier, les colonnes (23a) pouvant être ouvertes au moyen de trappes et servant d'armoire électrique.

17. Ensacheuse verticale pour sachets tubulaires selon l'une des revendications précédentes,
**caractérisée en ce que**
- les générateurs de courant sont disposés séparément séparément pour chaque module de moteur dans le module de châssis, en particulier dans poutre longitudinale supérieure (23 b) du module de châssis (23), et/ou
- sont utilisés comme moteurs électriques et servomoteurs qui produisent du courant lors du freinage des composants qu'ils entraînent, par exemple du bras de robot (20 x).

18. Ensacheuse verticale pour sachets tubulaires selon l'une des revendications précédentes,
**caractérisée en ce que**
- les unités de génération de courant comprennent des condensateurs tampon dans lesquelles le courant généré par les servomoteurs et non utilisé momentanément dans ce module de machine peut être stocké temporairement et en particulier
- les condensateurs tampons sont disposés dans l'armoire électrique

19. Procédé pour faire fonctionner une ensacheuse verticale pour sacs tubulaire, en particulier selon l'une des revendications précédentes, qui produit des sachets tubulaires (96), contenant au moins chacun un produit (100), avec les étapes suivantes
- livraison en vrac des produits (100) à emballer à l'ensacheuse au moyens d'un convoyeur de produits en particulier une bande de produits (8),
- déformation d'une bobine de film quasi sans fin (99) en un tube de film (99) par mouvement de va-et-vient et scellage longitudinal des bords longitudinaux scellables de la bande de film (99) au moyen d'une unité de scellage longitudinale (a1), - amenée des produits (100) ou groupes de produits (100') dans le tube de film (99) obtenu par une chaîne d'alimentation (2), sur laquelle sont disposés des compartiments (4) espacés dans le sens de défilement (10b) de la chaîne d'alimentation (2) par les entraîneurs (3) pour les produits (100),
- scellage transversal dudit tube de film (99) entre les produits (100) ou groupes de produits (100') s'y trouvant sur l'ensemble de la largeur du tube de film (99) au moyen d'une unité transversale de scellage (1 b),
- séparations des sachets tubulaires individuels (96) sur au moins une soudure transversale (98) intermédiaire,
**caractérisé en ce que**
- le transfert des produits (100) du convoyeur de produits aux compartiments (4) de la chaîne d'alimentation (2) s'effectue au moyen de plusieurs dispositifs de préhension (20) disposés dans le sens de défilement (10b) de la chaîne d'alimentation (2) espacés le long de la chaîne d'alimentation (2),
- la vitesse de défilement de la chaîne d'alimentation (2) est commandée en fonction du nombre déterminé de produits (100) amenés par unité de temps en particulier dans la zone de transfert (22),
- la vitesse de défilement de la bande de film (99) est commandée, notamment de manière analogique, en fonction de la vitesse de défilement de la chaîne d'alimentation (2),
- la température de l'unité de scellage longitudinale (1a), en particulier des bobines de scellage longitudinales (6), est commandée en fonction de la vitesse de défilement (10a) de la bobine de film (99).

20. Procédé selon l'une des revendications de procédé précédentes, **caractérisé en ce que**
- la vitesse de variation de la vitesse de défilement de la chaîne d'alimentation (2) est limitée à une telle vitesse que la vitesse de variation peut être adaptée analogiquement à la variation de température de l'unité de scellage longitudinale (1a) en fonction de la température instantanée de l'unité de de scellage longitudinale (1a), et/ou
- dans un second niveau de commande, le dernier robot dans le sens de défilement (1a) de la chaîne d'alimentation (2) commande la vitesse de défilement de la chaîne d'alimentation (2), de sorte que seuls les compartiments complétement remplis (4) de la chaîne d'alimentation (2) quittent la zone de transfert (22).

21. Procédé selon l'une des revendications de procédé précédentes,
**caractérisé en ce que**
les surfaces de contact (43) des entraîneurs (3) sont maintenues à la verticale le long du trajet de transport (27) de la chaîne d'alimentation (2) selon un angle vertical (18) par rapport à l'horizontale, de sorte que les surfaces de contact (43) conservent leur angle droit (18) à l'extrémité du trajet de transport (27) au moins sur une première partie de la rotation autour de la poulie de renvoi (2a) de la chaîne d'alimentation (2) en aval du courant jusqu'à ce que l'entraîneur respectif (3) disparaisse en dessous de la surface d'appui pour les produits (100).

22. Procédé selon l'une des revendications de procédé précédentes,
**caractérisé en ce que**
- dans le cas de changement d'équipement de l'ensacheuse verticale à un nouveau produit (100), les entraîneurs (3) fixés de manière amovible sur la chaîne d'alimentation ou au moins une partie de chaque entraîneur (3) sont retirés automatiquement par les dispositifs de préhension (20) ou un changeur d'entraîneurs et
- soit des entraîneurs (3) ou parties d'entraîneur de forme différente sont fixés automatiquement sur la chaîne d'alimentation (2) aux mêmes endroits ou à d'autres endroits de la chaîne d'alimentation (2),
- et en particulier pour la modification des dispositifs de préhension (20), les outils de produits (21 a) sont remplacés automatiquement par des outils d'entraînement (21 b), un magasin (14) pour les outils (21a, b) et/ou un dispositif changement d'outil étant prévus dans la zone de transfert (22) et de préhension (20') de chaque dispositif de préhension (20).

23. Procédé selon l'une des revendications de procédé précédentes, **caractérisé en ce que**
les parties d'appui (15a, b) pour les produits (100) sont déplacées de part et d'autres des entraîneurs (3) dans le sens de défilement (10b) avec les entraîneurs (3), en particulier en synchronisme, et/ou les deux parties d'appui (15a, b) sont déplacées les unes avec les autres relativement synchrone ou non, et en particulier les parties d'appui (15a, b) sont déplacées vers l'extérieur de la chaîne d'alimentation (2) à l'extrémité aval du trajet de transport (27), en particulier dans le fait que les plans de rotation (17') des chaînes d'appui (17) sont disposés suivant un angle au plan de rotation (2') de la chaîne d'alimentation (2).
